# EUROPÄISCHE PATENTSCHRIFT

(11) **EP 3 029 929 B1**
(45) Veröffentlichungstag und Bekanntmachung des Hinweises auf die Patenterteilung: **02.01.2019**
(21) Anmeldenummer: 15193038.5
(22) Anmeldetag: 04.11.2015
(51) Int. Cl.: H04N 5/232, H04N 7/18, B60R 1/06, B60R 1/00, B60R 21/00

(54) **SICHTSYSTEM**
VISION SYSTEM
SYSTEME DE VISION

(30) Priorität: 05.12.2014 DE 102014018040
(43) Veröffentlichungstag der Anmeldung: 08.06.2016
(73) Patentinhaber: MEKRA LANG GmbH & Co. KG, 91465 Ergersheim (DE)
(72) Erfinder: LANG, Werner, 91465 Ergersheim (DE); SNEL, Jaap-Jan, 91465 Ergersheim (DE); REDLINGSHÖFER, Andreas, 90619 Trautskirchen (DE); GEIßENDÖRFER, Peter, 91605 Gallmersgarten (DE); BAUER, Stefan, 91466 Gerhardshofen (DE)
(74) Vertreter: Kramer Barske Schmidtchen Patentanwälte PartG mbB

(56) Entgegenhaltungen:
- DE-A1- 10 221 513
- DE-A1-102010 032 411
- US-A1- 2008 044 061

## Beschreibung

### Gebiet der Erfindung

Die vorliegende Erfindung betrifft ein Sichtsystem für ein Nutzfahrzeug mit Auflieger, Trailer, Anhänger oder einem anderen zur Fahrerkabine schwenkbaren, sich nach hinten erstreckenden Abschnitt, oder für einen Personenkraftwagen mit Anhänger, insbesondere ein Kamera-Monitor-System für ein Nutzfahrzeug.

Bei Kraftfahrzeugen finden immer mehr Kamera-Monitor-Systeme Einsatz, die zusätzlich zu den bekannten (Rück-)Spiegeln oder als Ersatz zu diesen angewendet werden. Dem Fahrer werden hierbei auf einer Wiedergabeeinheit (Monitor) Bildbereiche wiedergegeben, die durch zumindest ein Bildaufnahmegerät (z.B. Kamera oder Bildsensor) aufgenommen werden, um so Bereiche, die durch Spiegel erfasst und dargestellt werden, oder Bereiche, die durch Spiegel nicht erfasst werden können, wiederzugeben. Bei Fahrzeugen, die kein Heckfenster aufweisen, sind letztgenannte Bereiche beispielsweise Bereiche direkt hinter dem Fahrzeug. Ebenso können mit solchen Systemen die Bereiche des sogenannten toten Winkels dem Fahrer besser einsehbar dargestellt werden.

Allerdings ist die Wiedergabefläche für die Darstellung des aufgenommenen Bildbereiches (bzw. der aufgenommen Bildbereiche) begrenzt. Dennoch soll die durch die Wiedergabeeinheit dargestellte Information für den Fahrer übersichtlich, schnell erfassbar und begreifbar sein. Der gesamte aufgenommene Bildbereich enthält allerdings Informationen unterschiedlicher Gewichtigkeit, d.h. es liegen unterschiedliche Anforderungen bezüglich jeweiliger Bildteilbereiche vor, insbesondere in der Größe der Darstellung von Objekten (z.B. Fahrzeugheck, Bordstein etc.). Diese unterschiedlichen Anforderungen ändern sich zudem mit der jeweiligen vorliegenden Fahrsituation. So sind beim Rückwärtsfahren Bildteilbereiche von anderer (größerer) Bedeutung als bei einer schnellen Geradeausfahrt oder bei einem Abbiegevorgang. So hat beispielsweise bei einem Abbiegevorgang mit einem Anhänger ein (mittlerer) Bildteilbereich eines mit einer im Wesentlichen längs entlang des Fahrzeuges gerichteten Kamera aufgenommenen Bildes eine sehr geringe Bedeutung, da dieser überwiegend den Anhänger wiedergibt. Der gleiche Bildteilbereich kann allerdings bei einer Geradeausfahrt oder bei einem Senkrecht-Einparken in eine Parklücke eine sehr hohe Bedeutung aufweisen, d.h. er besitzt einen sehr hohen Informationsgehalt für den Fahrer.

Die EP 2 623 374 B1 offenbart ein Sichtsystem für ein Nutzfahrzeug zur Darstellung von gesetzlich vorgeschriebenen Sichtfeldern eines Hauptspiegels und eines Weitwinkelspiegels (Sichtfeldern II und IV) der selben Fahrzeugseite in einem Fahrerhaus. Bei dem System werden die Darstellungen, die gewöhnlicher Weise auf dem Hauptspiegel und dem Weitwinkelspiegel einer Fahrzeugseite zu sehen sind, in ein gemeinsames Bild kombiniert, das durchgängig und aus mindestens zwei einzelnen Bildern überlappend oder unmittelbar aneinander angrenzend zusammengesetzt ist. Um gleichzeitig das Weitwinkelspiegelsichtfeld und das Hauptspiegelsichtfeld abdecken zu können, werden die Bilder, die unterschiedliche Bildwinkel bzw. Verzerrungen haben und welche jeweils eines der Sichtfelder beinhalten, nebeneinander in gleicher Perspektive, das heißt aus gleicher virtueller Blickrichtung, zusammengesetzt, wobei ein Modifikationsbereich des Bildes mit dem größeren Bildwinkel, der nicht dem des natürlichen Eindrucks des menschlichen Auges entspricht, derart modifiziert wird, dass einerseits kein abrupter Übergang sondern ein verlaufender, verschwimmender Übergang im Hinblick auf die durch die verschiedenen Blickwinkel hervorgerufene Verzerrung zwischen den Bildern vorhanden ist. Die Modifikation im Modifikationsbereich, die in dem Bild mit dem größeren Bildwinkel (Weitwinkelspiegelsichtfeld) vorgenommen wird, erfolgt dabei beispielsweise durch Löschen von Pixelreihen im Modifikationsbereich, wodurch eine Stauchung des im Modifikationsbereich dargestellten Bereichs bewirkt wird. Dadurch kann die zur Verfügung stehende Wiedergabefläche in der Hinsicht ausgenutzt werden, dass der fahrsituationsbedingte wichtigere Randbereich größer dargestellt werden kann.

Die DE 199 00 498 B4 offenbart ein Verfahren zur Einsichtnahme eines rückwärtigen außenspiegelbezogenen Beobachtungsraumes bei Kraftfahrzeugen, wobei der mit Kameras oder Bildsensoren erfasste Beobachtungsraum auf einem Bildschirm abgebildet wird. Der Beobachtungsraum enthält einen geradlinig nach hinten gerichteten Bereich und einen toten Winkelbereich, wobei letzterer in einem größeren Winkelbereich erfasst wird, als der andere Bereich und beide Bereiche werden in einem umgekehrt proportionalen Breitenverhältnis nebeneinander auf dem Bildschirm angezeigt.

Die DE 10 2013 009 894 A1 offenbart ein Kamerasystem und Verfahren zum Steuern des Kamerasystems für ein Fahrzeug. Das Kamerasystem weist eine Kameraeinrichtung und eine Anzeigeeinrichtung zum Anzeigen von wenigstens einem Ausschnitt des von der Kameraeinrichtung erfassten Bildes auf, wobei das Kamerasystem zwei schwenkbare Kameraeinrichtungen aufweist, die jeweils einen Bereich entlang der und hinter den Längsseiten des Fahrzeuges erfassen. Mittels einer Steuereinheit werden ein oder mehrere Fahrzeugmessdaten empfangen und aus den einen oder mehreren Fahrzeugmessdaten werden eine aktuelle Fahrsituation und eine entsprechende fahrsituationsabhängige Sollposition und/oder Zoomstufe für die wenigstens die Kurveninneninnenseite des Fahrzeuges erfassende Kameraeinrichtung ermittelt. Diese ermittelte fahrsituationsabhängige Sollposition und/oder Zoomstufe wird bei der wenigstens die Kurveninneninnenseite des Fahrzeuges erfassende Kameraeinrichtung eingestellt und der sich ergebene Bildausschnitt auf der Anzeigeeinrichtung angezeigt.

Die DE 10 2013 015 847 B3 offenbart ein Sichtsystem, das eine am Fahrzeug angebrachte Aufnahmeeinheit mit mindestens einem Aufnahmegerät, eine Berechnungseinheit und eine Wiedergabeeinheit aufweist, wobei das Aufnahmegerät angepasst ist, einen Aufnahmebereich hinter dem Fahrzeug zu erfassen, der einen im Wesentlichen unverzerrten nach hinten gerichteten Aufnahmebereich hinter dem Fahrzeug und einen im Wesentlichen nach unten gerichteten Aufnahmebereich hinter dem Fahrzeug enthält. Das Sichtsystem ist dabei angepasst, aus dem Aufnahmebereich ein erstes Bild zu extrahieren, das dem unverzerrten Aufnahmebereich entspricht, und ein zweites Bild zu extrahieren, das dem nach unten gerichteten Aufnahmebereich entspricht, und auf der Wiedergabeeinheit das erste Bild in einem oberen Bildbereich und das zweite Bild in einem unteren Bildbereich darzustellen.

Weiterhin offenbaren die DE 10 2009 045 233 A1, DE 102 21 513 B4 und EP 2 042 374 B1 Sichtsysteme, die eine Umgebung eines Personenkraftfahrzeug erfassen können.

DE 10 2010 032 411 A1 offenbart ein Sichtsystem für ein Nutzfahrzeug mit Anhänger zur Darstellung eines außerhalb des Fahrzeugs liegenden Aufnahmebereichs enthaltend eine am Fahrzeug angebrachte Aufnahmeeinheit mit mindestens einem Aufnahmegerät zur Erfassung eines Bildes des Aufnahmebereiches, wobei der Aufnahmebereich mindestens zwei Teilaufnahmebereiche aufweist, eine Wiedergabeeinheit für den Fahrzeuginnenraum mit einem Wiedergabebereich mit vorbestimmten Abmessungen, und eine Berechnungseinheit, die das von der Aufnahmeeinheit erfasste Bild verarbeitet und zur Anzeige an die Wiedergabeeinheit zuführt,wobei die Berechnungseinheit angepasst ist, das von der Aufnahmeeinheit erfasste Bild des Aufnahmebereiches zumindest in einer Bildwinkelrichtung mit einem Skalierungsfaktor zu skalieren, wobei die Wiedergabeeinheit angepasst ist, das skalierte Bild in dem Wiedergabebereich anzuzeigen, wobei das skalierte Bild mindestens zwei Teilbilder enthält, die den mindestens zwei Teilaufnahmebereichen jeweilig entsprechen.

US 2008/044061 A1 offenbart ein System für ein Fahrzeug mit Anhänger zur Darstellung eines außerhalb und unterhalb des Fahrzeugs liegenden Aufnahmebereichs.

Davon ausgehend ist es die Aufgabe der Erfindung, ein Sichtsystem für ein Fahrzeug mit Anhänger, insbesondere Nutzfahrzeug mit Anhänger, vorzuschlagen, mit dem in Abhängigkeit der Fahrsituation einer Kurvenfahrt oder eines Abbiegevorgangs, bei welchem der Anhänger gegenüber dem Fahrzeug seitlich ausschwenkt, die Ausnutzung einer vorbestimmten, begrenzten Wiedergabefläche einer Wiedergabeeinheit für die Darstellung der fahrsituationsabhängigen bedeutenden, wichtigen Bildbereiche verbessert ist.

In der Beschreibung dieser Erfindung beziehen sich Richtungsangaben auf ein Kraftfahrzeug bei normaler Vorwärtsfahrt. In seitlicher Richtung bedeutet somit diejenige Richtung, die entlang der Senkrechten zu einem Vorwärtsfahrrichtungsvektor des Fahrzeugs ist und der Links-Rechts-Richtung entspricht.

Ein Anhänger im Sinne der vorliegenden Lehren umfasst Anhänger, die mittels Anhängerkupplung an ein Fahrzeug (Zugmaschine) gekoppelt werden, Auflieger (sogenannte Trailer), die auf den hinteren, abgesenkten Bereich einer Zugmaschine aufgelegt und damit schwenkbar, um zumindest eine vertikale Achse, verbunden werden. Darunter fallen auch so genannte Gigaliner und Roadtrains, die mehrteilige Anhänger aufweisen können. In allgemeinen Worten ist ein Anhänger ein rückwärtig zur Fahrerkabine eines Nutzfahrzeuges befindlicher und seitlich relativ zur Fahrerkabine beweglicher (ausschwenkbarer) Fahrzeugteil, der bei einer Kurvenfahrt relativ zur Fahrerkabine um eine vertikale Achse schwenkt.

### Darstellung der Erfindung

Die oben angegebene Aufgabe wird durch ein Sichtsystem für ein Fahrzeug mit den Merkmalen des Anspruchs 1 gelöst.

Das Sichtsystem für ein Fahrzeug mit Anhänger, insbesondere ein Nutzfahrzeug mit Anhänger, zur Darstellung eines außerhalb des Fahrzeuges liegenden Aufnahmebereiches weist eine am Fahrzeug angebrachte Aufnahmeeinheit mit mindestens einem Aufnahmegerät zur Erfassung eines Bildes des Aufnahmebereiches, wobei der Aufnahmebereich mindestens zwei Teilaufnahmebereiche aufweist, auf. Ferner weist es eine Wiedergabeeinheit für den Fahrzeuginnenraum mit einem Wiedergabebereich, der eine vorbestimmte Abmessung bzw. Auflösung (Pixelanzahl) aufweist, und eine Berechnungseinheit, die das von der Aufnahmeeinheit erfasste Bild verarbeitet und zur Anzeige an die Wiedergabeeinheit zuführt, auf. Die Berechnungseinheit ist dabei derart angepasst, das von der Aufnahmeeinheit erfasste Bild des Aufnahmebereiches zumindest in einer Bildwinkelrichtung mit einem Skalierungsfaktor zu skalieren, und die Wiedergabeeinheit ist dabei derart angepasst, das skalierte Bild in dem Wiedergabebereich anzuzeigen, wobei das skalierte Bild mindestens zwei Teilbilder enthält, die den mindestens zwei Teilaufnahmebereiche jeweilig entsprechen, und eines der Teilbilder ungestaucht ist und eines der Teilbilder gestaucht ist. Der Skalierungsfaktor wird mittels einer Abbildungsfunktion bestimmt, die eine Funktion des Bildwinkels des erfassten Bildes des Aufnahmebereiches ist, und die Abbildungsfunktion entsprechend einer Fahrsituation so angepasst ist, dass bei der Fahrsituation eines Abbiegevorgangs oder einer Kurvenfahrt des Fahrzeuges mit Anhänger, der Bildbereich, in dem eine Heckkante (HK) des Anhänger zu sehen ist, in dem Teilbild liegt, das ungestaucht ist.

Unter Skalieren wird in diesem Zusammenhang nicht verstanden, ein von der Aufnahmeeinheit erfasstes Bild auf die Abmaße der Wiedergabeeinheit zu verkleinern bzw. an die Auflösung der Wiedergabeeinheit anzupassen, d.h. in allen Bildrichtungen entsprechend der in der jeweiligen Bildrichtung vorhandenen Auflösung, z.B. gleichmäßig, an die Abmaße bzw. Auflösung (Pixelanzahl) der Wiedergabeeinheit anzupassen. Vielmehr bezieht sich der Begriff Skalierung ausschließlich auf eine zusätzliche, dieser allgemeinen Anpassung bzw. Verkleinerung gegenüber vorgenommene Stauchung bzw. Streckung des wiedergegebenen Bildes bzw. einzelner Bildteile davon in der Richtung des Bildwinkels, die in der Regel der Links-Recht-Richtung auf dem Wiedergabebild entspricht.

Ein Skalierungsfaktor n = 1 entspricht damit einer Abbildung bzw. Wiedergabe, die zwar die allgemeine Verkleinerung bzw. Anpassung an die Abmaße bzw. Auflösung der Wiedergabeeinheit beinhaltet, bei der jedoch keine zusätzliche Stauchung oder Streckung vorgenommen ist, und entspricht somit den ungestauchten Bildbereichen. Ungestaucht im Sinne der vorliegenden Lehren beinhaltet neben den Skalierungen mit Skalierungsfaktor n = 1 auch geringfügige Stauchungen, so dass diese (nahezu) ungestauchten Bereiche dem Bild eines Rückblickspiegels entsprechen, bei dem eine geringe Stauchung vorliegt, so dass z.B. ein Objekt mit realer Kreisform elliptisch erscheint. Insbesondere sollen von dem Ausdruck "ungestaucht" alle Stauchungen umfasst sein, die neben der oben beschriebenen Anpassung an die Auflösung der Wiedergabeeinheit eine geringfügige Stauchung aufweisen und bevorzugt eine gesamte maximale Abweichung von 35 % gegenüber dem von der Aufnahmeeinheit erfassten, unverzerrten Bild, und weiter bevorzugt eine maximale Abweichung von 30 %, und weiter bevorzugt eine maximale Abweichung von 25 %, und weiter bevorzugt eine maximale Abweichung von 15 %, und weiter bevorzugt eine maximale Abweichung von 10 %, und weiter bevorzugt eine maximale Abweichung von 5 % aufweisen.

Im verzerrten Bereich findet die Stauchung bzw. Streckung vorzugsweise nur in einer Bildrichtung, die weiter vorzugsweise der horizontalen Bildwinkelrichtung entspricht, statt, kann aber auch in beiden Richtungen vorliegen.

Durch das Skalieren des erfassten Bildes des Aufnahmebereichs in Abhängigkeit von der jeweiligen Fahrsituation ist es möglich, Bildbereiche, die in der bestimmten Fahrsituation nicht relevante oder nur geringe Information für den Fahrer enthalten, derart zu bearbeiten, dass diese Bereiche in dem Wiedergabebereich verkleinert (gestaucht) dargestellt werden. Beispielsweise können diejenigen Bildbereiche, in denen ausschließlich der Fahrzeuganhänger und nicht die Umgebung zu sehen ist, deutlich zusammengestaucht werden, da sie keine relevante Information enthalten. Weiterhin ist es möglich, Bildbereiche, die für den Fahrer in der bestimmten Fahrsituation von größerer Bedeutung sind, vergrößert (ausgedehnt, aufgeweitet) bzw. unter Umständen weniger verzerrt in dem Wiedergabebereich darzustellen. Der Fahrer erhält somit ein leicht und besser verständliches Bild und insbesondere werden dem Fahrer die fahrsituationsbedingten wichtigen Informationen verbessert dargestellt. Dabei wird der vorbestimmte Bereich (die begrenzte Fläche) des Wiedergabebereiches, also z.B. die begrenzte Monitorfläche besser ausgenutzt.

Ferner bleibt z.B. bei einem Abbiegevorgang oder einer Kurvenfahrt eines Fahrzeuges mit Anhänger, der Bildbereich, in dem die Heckkante des Anhängers zu sehen ist, durch die Skalierung ungestaucht, wohingegen andere Bereiche gestaucht werden, so dass der dadurch "eingesparte" Bereich des Wiedergabebereichs für eine verbesserte (ungestauchte) Darstellung des Bereiches um die Heckkante des Anhängers genutzt werden kann. Dies führt zudem dazu, dass der Fahrer den Bereich um die Heckkante des Anhängers ungestaucht sieht, was ihm die Orientierung vereinfacht, dadurch dass das wiedergegebene Bild in diesem Bereich "normal" erscheint.

Der Erfindung liegt somit die Idee zugrunde, das durch die Aufnahmeeinheit erfasste Bild des Aufnahmebereiches derart zu skalieren, dass entsprechend der spezifischen Fahrsituation, z.B. einer Kurvenfahrt, eines Abbiegevorganges oder einer Rückwärtsfahrt, Bildbereiche mit wenigen oder unnützen Informationen entsprechend verkleinert und weniger Wiedergabefläche beanspruchend dargestellt werden und Bildbereiche mit wichtigen Informationen entsprechend normal groß bzw. gegenüber dem verkleinerten Bereichen vergrößert dargestellt werden. Insgesamt wird gelichzeitig ein für den Fahrer des Fahrzeuges leicht verständliches Gesamtbild in dem zur Verfügung stehenden Wiedergabebereich der Wiedergabeeinheit angezeigt.

Insbesondere befindet sich die Heckkante des Anhängers in einem Teilbild, das nicht gestaucht ist. Somit wird dem Fahrer ein wichtiger Bereich, der mit hohem Umfallpotential behaftet ist und für die Orientierung des Fahrers bezüglich der Umgebung wichtig ist, deutlich angezeigt. Weiterhin wird die Fläche des Wiedergabereiches durch das Sichtsystem verbessert ausgenutzt und auf größere Wiedergabeeinheiten, die z.B. für Standardfahrsituationen (Vorwärtsfahrt) überdimensioniert wären, kann verzichtet werden, zumal die Größe der Wiedergabeeinheit durch die begrenzten Platzverhältnissen in den Fahrzeugen limitiert ist.

In einer vorteilhaften Ausgestaltung befindet sich ein an das Teilbild, das nicht gestaucht ist und die Heckkante enthält, anschließendes und gestauchtes Teilbild, das einem Teilaufhahmebereich entspricht, der in Richtung des Fahrzeuges gerichtet ist. Dieser Aufnahmebereich schließt sich somit an die Seitenkante des Fahrzeuges an. Auf der gegenüberliegenden Seite des Teilbilds, das nicht gestaucht ist und die Heckkante enthält, schließt ebenfalls ein gestauchtes Teilbild, das einem Teilaufnahmebereich entspricht, der von dem Fahrzeuges weg gerichtet ist. Das eine oder beide der gestauchten Teilbilder kann/können dabei mit einem Skalierungsfaktor von 0 gestaucht sein, so dass in diesem Extremfall das entsprechende Teilbild in der Wiedergabeeinheit nicht dargestellt ist. Beispielsweise ist dies das an das Fahrzeug angrenzende und alle Bereiche des Anhängers mit Ausnahme des Heckkantenbereichs beinhaltende Bild.

Vorteilhafte Ausführungsformen sind in den abhängigen Ansprüchen angegeben.

In einer vorteilhaften Ausgestaltung liegt die Heckkante des Anhängers stets in dem Teilbild, das ungestaucht ist. Alternativ liegt sie während der Fahrsituation eines Abbiegevorgangs oder einer Kurvenfahrt des Fahrzeuges mit Anhänger stets in dem ungestauchten Teilbild. In einer weiter vorteilhaften Ausführungsform liegt sie stets dann, wenn sie im Bild angezeigt wird bzw. sichtbar ist, im ungestauchten Teilbild. Dadurch wird dem Fahrer z.B. über den ganzen Abbiegevorgang oder die Kurvenfahrt hinweg, stets der Bereich der Heckkante unverzerrt angezeigt, was zu einer verbesserten Orientierung für den Fahrer führt.

In einer vorteilhaften Ausgestaltung wird der Teilaufnahmebereich, der dem Teilbild entspricht, das ungestaucht ist, dynamisch während der Fahrsituation eines Abbiegevorgangs oder einer Kurvenfahrt des Fahrzeuges mit Anhänger in Abhängigkeit der Lage der Heckkante (HK) relativ zu dem Fahrzeug in seiner Größe angepasst. In anderen Worten ist das Sichtsystem derart angepasst, dass es mit dem zunehmenden Ausschwenken des Anhängers durch die Anpassung der Größe des Teilaufnahmebereiches, der dem Teilbild entspricht, das ungestaucht ist, die Heckkante stets in dem ungestauchten Teilbild darstellt. In den vorliegenden Lehren entspricht die Größe einer Ausdehnung über einen (horizontalen) Bildwinkel. Das heißt, dass bei zunehmenden Ausschwenken des Anhängers der Bildwinkel des entsprechenden Teilaufnahmebereiches vergrößert wird. Umgekehrt, mit abnehmenden Ausschwenken des Anhängers, wird der Bildwinkel verkleinert.

In einer vorteilhaften Ausgestaltung ist die Größe des Teilaufhahmebereiches, der dem Teilbild entspricht, das ungestaucht ist, konstant, und die Abbildungsfunktion wird während der Fahrsituation eines Abbiegevorgangs oder einer Kurvenfahrt des Fahrzeuges mit Anhänger in Abhängigkeit der Lage der Heckkante (HK) relativ zu dem Fahrzeug dynamisch so angepasst, dass das in dem Wiedergabebereich dargestellte ungestauchte Teilbild entsprechend der Lage der Heckkante verschoben wird. In anderen Worten ist das Sichtsystem derart angepasst, dass es mit dem zunehmenden Ausschwenken des Anhängers durch dynamisches Verschieben des Teilaufnahmebereiches, der dem Teilbild entspricht, das ungestaucht ist, die Heckkante stets in dem ungestauchten Teilbild darstellt. Die Größe, d.h. der Bildwinkel des Teilaufnahmebereiches, der dem Teilbild entspricht, das ungestaucht ist, bleibt in diesem Fall konstant. Durch das Verschwenken/Verschieben wird ein neben diesem Teilaufnahmebereich liegender Teilaufnahmebereich, der dem gestauchten Teilbild entspricht, entsprechend verkleinert und ein neben diesem Teilaufnahmebereich liegender Teilaufnahmebereich, der einem gestreckten bzw. gezerrten Teilbild entspricht, entsprechend vergrößert. Das ist dann sinnvoll ist, wenn in ihm weniger relevante Bereiche um das Fahrzeug bzw. Abbildungen des Fahrzeuges selbst liegen.

In einer vorteilhaften Ausgestaltung wird der Aufnahmebereich dynamisch während der Fahrsituation eines Abbiegevorgangs oder einer Kurvenfahrt des Fahrzeuges mit Anhänger in Abhängigkeit der Lage der Heckkante relativ zu dem Fahrzeug verschwenkt. In anderen Worten ist das Sichtsystem derart angepasst, dass es mit dem zunehmenden Ausschwenken des Anhängers durch dynamisches Verschieben des Teilaufnahmebereiches, der dem Teilbild entspricht, das ungestaucht ist, diesen sowie den gesamten Aufnahmebereich mitführt, so dass sich die Heckkante stets im dem ungestauchten Teilbild befindet. Dazu kann beispielsweise die Aufnahmeeinheit insgesamt verschwenkt werden oder aber es wird der Bildteil, der aus dem gesamtem aufgenommenen Bild ausgeschnitten und dargestellt wird, entsprechend verschwenkt.

In einer vorteilhaften Ausgestaltung wird ein Abstand zwischen der Heckkante und einem bezüglich des Fahrzeugs außenliegenden Rand des Teilaufnahmebereichs, der dem Teilbild entspricht, das ungestaucht ist, während der Fahrsituation eines Abbiegevorgangs oder einer Kurvenfahrt des Fahrzeuges mit Anhänger in Abhängigkeit der Lage der Heckkante relativ zu dem Fahrzeug konstant gehalten. Auch in dieser Ausgestaltung verbleibt die Heckkante z.B. während des gesamten Abbiegevorgangs bzw. der Kurvenfahrt in dem ungestauchten Teilbild. Da stets ein konstanter Abstand zwischen der Heckkante und dem außenliegenden Rand des Teilaufnahmebereichs, d.h. dem außenliegenden Rand des ungestauchten Teilbildes gehalten wird, wird dem Fahrer über den gesamten Zeitraum ein leicht verständliches Bild dargestellt und er kann unmittelbar neben der Heckkante liegende Hindernisse gut erkenn, was z.B. bei einem Rangiervorgang mit Rückwärtsfahrt relevant ist.

In einer vorteilhaften Ausgestaltung ist die Abbildungsfunktion mindestens bereichsweise innerhalb eines Bildbereiches nicht konstant. In anderen Worten kann der Skalierungsfaktor mit der Funktion n = f (ϕ) bestimmt werden, wobei n dem Skalierungsfaktor entspricht und ϕ der entsprechende Bildwinkel ist. Dadurch wird ein nicht konstanter Skalierungsfaktor angewendet, so dass in diesem Bereich (diesen Bereichen) das von der Aufnahmeeinheit erfasste Bild je nach Wahl des nicht konstanten Skalierungsfaktors auf verschiedene Weisen bzw. in unterschiedlichen Maßen gestaucht oder aufgeweitet wird. Damit lassen sich in der jeweiligen vorliegenden Fahrsituation Bereiche mit weniger wichtigen Informationen verkleinert und Bereiche mit bedeutsamen Informationen vergrößert für den Fahrer in dem Wiedergabebereich darstellen.

In einer vorteilhaften Ausgestaltung weist die Abbildungsfunktion mindestens einen Bereich auf, in welchem der Skalierungsfaktor in Abhängigkeit des Bildwinkels linear verläuft, d.h. n = f (ϕ) = a*ϕ + c, wobei a, c Konstanten sind. Dabei kann in einer vorteilhaften Ausgestaltung die Abbildungsfunktion mindestens bereichsweise konstant sein, wobei der Skalierungsfaktor in Abhängigkeit des Bildwinkels konstant verläuft, d.h. n = f (cp) = c.

Neben dem Bereich mit konstanten Skalierungsfaktor, der bei einem linear verlaufenden Skalierungsfaktor und a = 0 erhalten wird, kann durch lineares Fallen oder lineares Ansteigen des Skalierungsfaktors (a ≠ 0) ein stetig zunehmendes Stauchen oder Aufweiten in dem in dem Wiedergabebereich dargestellten Bild erzielt werden.

Wenn der Skalierungsfaktor konstant ist (a = 0), wird in dem jeweiligen Bildbereich das von der Aufnahmeeinheit erfasste Bild nicht zunehmend gestaucht oder aufgeweitet (verbreitert), sondern hat über den gesamten jeweiligen Bildbereich eine gleiche Stauchung, Aufweitung oder wird ohne Stauchung bzw. Aufweitung dargestellt. Wenn der Skalierungsfaktor konstant ist (n = c), werden Bereiche in Richtung des Bildwinkels unverändert, also nicht verzerrt, angezeigt und es findet lediglich, je nach Wahl des konstanten Skalierungsfaktors, ein zur normalen Verkleinerung zur Darstellung zusätzliches "Hineinzoomen" oder "Herauszoomen" in den bzw. aus dem Aufnahmebereich statt, der mit konstanten Skalierungsfaktor beaufschlagt ist.

In einer vorteilhaften Ausgestaltung weist die Abbildungsfunktion mindestens einen Bereich auf, in welchem der Skalierungsfaktor in Abhängigkeit des Bildwinkels nicht linear verläuft. Durch den nicht linear verlaufenden Skalierungsfaktor kann durch nicht lineares Fallen oder nicht lineares Ansteigen des Skalierungsfaktors eine beliebige Abbildungsfunktion verwendet werden und z.B. ein stetig zunehmendes Stauchen oder Aufweiten in dem in dem Wiedergabebereich dargestellten Bild erzielt werden, wobei Übergangsbereiche geschaffen werden, die beispielsweise einen "weicheren" Übergang in Bereiche mit wichtigen Informationen (entsprechend in Abhängigkeit der jeweiligen Fahrsituation) oder einen "härteren" Übergang in Bereiche mit unbedeutenden Informationen ermöglichen. Diese weicheren Übergänge werden vom Fahrer auf dem wiedergegebenen Bild nicht als Bruch wahrgenommen.

In einer vorteilhaften Ausgestaltung weist die Abbildungsfunktion mindestens einen Bereich auf, in welchem der Skalierungsfaktor in Abhängigkeit des Bildwinkels stetig verläuft. In einer stetig verlaufenden Abbildungsfunktion sind keine Sprünge in der Bilddarstellung im Wiedergabebereich vorhanden. Sofern die Abbildungsfunktion stetig differenzierbar ist, können auch Knicke in der Bilddarstellung ausgeschlossen werden. Dadurch lässt sich ein Bild in dem Wiedergabebereich der Wiedergabeeinheit erzielen, das leicht verständlich für den Fahrer ist.

Neben dem Bereich ohne Stauchung weist in einer vorteilhaften Ausgestaltung die Abbildungsfunktion mindestens zwei unterschiedlich verlaufende Bereiche, d.h. zwei Bereiche mit zueinander verschiedenen Abbildungsfunktionen n = f(cp), (n₁ = f₁(ϕ)) ≠ (f₂(ϕ) = n₂), in der Bildwinkelrichtung auf. Je Bildbereich kann eine beliebige mathematische Funktion für den Skalierungsfaktor angewendet werden oder es können, wenn beide Bildbereiche mit einer linearen Funktion n = f(ϕ) = a*ϕ + c bearbeitet werden, die Konstanten a, c, verschieden gewählt werden.

Werden neben den Bildbereich ohne Stauchung in einer vorteilhaften Ausgestaltung mindestens zwei unterschiedliche Abbildungsfunktionen für die Teilbereiche in der Bildwinkelrichtung verwendet, die den mindestens zwei Teilaufnahmebereichen entsprechen, ist beispielsweise der Funktionsverlauf im Übergangsbereich zwischen den Teilaufnahmebereichen sprunghaft. Dadurch wird dem Fahrer besser ein deutlicher Bruch als Übergang zwischen dem ungestauchten und dem gestauchten Teilbild angezeigt.

Ein solcher sprunghafter Übergang kann auch zwischen dem ungestauchten Bereich und dem Bereich mit Stauchung angewendet werden, wenn z.B. nur diese zwei Bereiche vorhanden sind. Auch hier wird das Erkennen, wo sich auf dem Wiedergabebild gestauchte und ungestauchte Bereiche befinden, für den Fahrer vereinfacht.

In einer vorteilhaften Ausgestaltung ist der dargestellte Bildwinkel in Abhängigkeit der Fahrsituation variabel. In anderen Worten wird der dargestellte Bildwinkel in Abhängigkeit von der Fahrsituation verändert und ist um einen zweiten Bildwinkel vergrößert, mit dem ein erweiterter Aufnahmebereich dargestellt wird. Die Abbildungsfunktion ist derart angepasst, dass der erweiterte Aufnahmebereich in dem Wiedergabebereich angezeigt werden kann. Dadurch wird der dargestellte Bildwinkel je nach Fahrsituation variiert. Durch die flexible Größe bzw. Erweiterung des Aufnahmebereichs können Informationen erfasst und angezeigt werden, die in der jeweiligen Fahrsituation (z.B. bei einem Rangiervorgang) von Bedeutung sein können, z.B. Bereiche, die über die Straßenbegrenzung hinausgehen, die z.B. ausgehend von dem Fahrzeug weiter rechts liegen. Da der Wiedergabebereich der Wiedergabeeinheit eine vorbestimmte Breite aufweist, wird das durch die Aufnahmeeinheit erfasste Bild des erweiterten Aufnahmebereichs mit einer entsprechend angepassten Abbildungsfunktion skaliert. In anderen Worten, es werden dann weniger relevante Bildbereiche und nur diese stärker skaliert, d.h. gestaucht, so dass das ganze erfasste Bild (welches größer in Richtung des Bildwinkels ist als ein erfasstes Bild von einem nicht erweiterten Aufnahmebereich) in dem Wiedergabebereich angezeigt werden kann. Die begrenzte Fläche des Wiedergabebereiches kann somit optimal ausgenutzt werden.

Zum Erfassen der Position und Lage der Heckkante des Anhängers, um die skalierten und unskalierten Bereiche zu bestimmen, kommen alle gängigen Objekterkennungsverfahren bzw. technische Möglichkeiten zur Positionsbestimmung in Betracht. In einer vorteilhaften Ausgestaltung wird die Lage der Heckkante mittels eines Positionssensors oder über Fahrzeugdaten, die die Länge des Fahrzeuges, die Länge des Anhängers und einen Lenkwinkel enthalten, bestimmt. Alternativ kann bevorzugt die Lage der Heckkante mittels der Berechnungseinheit aus dem erfassten Bild des Aufnahmebereiches durch Objekterkennung bestimmt werden. Dadurch kann die Lage der Heckkante genau bestimmt werden und darauf basierend die dynamische Anpassung der Abbildungsfunktion durch die Berechnungseinheit durchgeführt werden. Damit verbleibt die Heckkante in dafür relevanten Fahrsituationen stets im ungestauchten Teilbild.

Gemäß einem weiteren Aspekt weist das Sichtsystem für ein Fahrzeug zur Darstellung eines außerhalb des Fahrzeuges liegenden Aufnahmebereiches eine am Fahrzeug angebrachte Aufnahmeeinheit mit mindestens einem Aufnahmegerät zur Erfassung eines Bildes des Aufnahmebereiches, eine Wiedergabeeinheit für den Fahrzeuginnenraum mit einem Wiedergabebereich, der eine vorbestimmte Abmessung aufweist, und eine Berechnungseinheit, die das von der Aufnahmeeinheit erfasste Bild verarbeitet und zur Anzeige an die Wiedergabeeinheit zuführt, auf. Die Berechnungseinheit ist dabei derart angepasst, das von der Aufnahmeeinheit erfasste Bild des Aufnahmebereiches zumindest in einer Bildwinkelrichtung mit einem Skalierungsfaktor zu skalieren, und die Wiedergabeeinheit ist dabei derart angepasst, das skalierte Bild in dem Wiedergabebereich anzuzeigen. Der Skalierungsfaktor wird mittels einer Abbildungsfunktion bestimmt, die eine Funktion des Bildwinkels des erfassten Bildes des Aufnahmebereiches ist, und die Abbildungsfunktion wird abhängig von einer aktuellen Fahrsituation gewählt.

Durch das Skalieren des erfassten Bildes des Aufnahmebereichs in Abhängigkeit von der jeweiligen Fahrsituation ist es möglich, Bildbereiche, die in der bestimmten Fahrsituation nicht relevante oder nur geringe Information für den Fahrer enthalten, derart zu bearbeiten, dass diese Bereiche in dem Wiedergabebereich verkleinert (gestaucht) dargestellt werden. Weiterhin ist es möglich, Bildbereiche, die für den Fahrer in der bestimmten Fahrsituation von größerer Bedeutung sind, vergrößert (ausgedehnt, aufgeweitet) und unter Umständen weniger verzerrt in dem Wiedergabebereich darzustellen. Der Fahrer erhält somit ein leicht und besser verständliches Bild und insbesondere werden dem Fahrer die fahrsituationsbedingten wichtigen Informationen verbessert dargestellt. Dabei wird der vorbestimmte Bereich (die begrenzte Fläche) des Wiedergabebereiches, also z.B. die begrenzte Monitorfläche besser ausgenutzt. Beispielweise kann bei einem Abbiegevorgang oder einer Kurvenfahrt eines Fahrzeuges mit Anhänger, der Bildbereich, in dem der Anhänger zu sehen ist, durch die Skalierung gestaucht werden und der dadurch "eingesparte" Bereich des Wiedergabebereichs für eine vergrößerte (verbreiterte) Darstellung des Straßenrandes genutzt werden, indem dieser Bildbereich entsprechend skaliert (vergrößert) wird.

Dem Aspekt liegt somit die Idee zugrunde, das durch die Aufnahmeeinheit erfasste Bild des Aufnahmebereiches derart zu skalieren, dass entsprechend der jeweiligen Fahrsituation Bildbereiche mit wenigen oder unnützen Informationen entsprechend verjüngt dargestellt werden und Bildbereiche mit wichtigen Informationen entsprechend vergrößert dargestellt werden, aber insgesamt ein für den Fahrer des Fahrzeuges leicht verständliches Gesamtbild in dem zur Verfügung stehenden Wiedergabebereich der Wiedergabeeinheit angezeigt wird. Die Fläche des Wiedergabereiches wird dadurch verbessert ausgenutzt und auf größere Wiedergabeeinheiten, die z.B. für Standardfahrsituationen (Vorwärtsfahrt) überdimensioniert wären, kann verzichtet werden, zudem größere Wiedergabeeinheiten in den begrenzten Platzverhältnissen in den Fahrzeugen auch ein Sicherheitsrisiko darstellen würden.

Bevorzugt enthält das System mindestens zwei mathematische unterschiedliche Abbildungsfunktionen für mindestens zwei unterschiedliche Fahrsituationen. Diese unterschiedlichen Abbildungsfunktionen können lineare Funktionen, Polynomfunktionen oder jede andere mathematische Funktion sein. Ebenso können für jede der mindestens zwei Fahrsituationen für verschiedene Bildbereiche mehrere unterschiedliche Funktionen für den Skalierungsfaktor kombiniert werden, d.h. je Fahrsituation gibt es z.B. zwei Bildbereiche mit unterschiedlichen Funktionen für den Skalierungsfaktor, die sich auch zwischen den Fahrsituationen unterscheiden. Ebenso muss die Anzahl der Bildbereiche je Fahrsituation nicht gleich sein.

In einer vorteilhaften Ausgestaltung entspricht der Bildwinkel einem horizontalen Bildwinkel. Dadurch wird das erfasste Bild in einer horizontalen Richtung skaliert. Dies ist vor allem von Vorteil bei der Bearbeitung und Wiedergabe von Aufnahmebereichen, die Bereiche links und/oder rechts des Fahrzeuges betreffen. Eine Skalierung kann beispielweise bei Kurvenfahrten stattfinden, bei welchen sich im Aufnahmebereich vermehrt Fahrzeugbereiche befinden. Diese Bereiche lassen sich dann stauchen, um dafür Randbereiche des Aufnahmebereiches (z.B. Straßenrand, weitere Fahrspuren an der Kurveninnenseite) vergrößert darzustellen.

In einer vorteilhaften Ausgestaltung entspricht der Bildwinkel einem vertikalen Bildwinkel.

Dadurch wird das erfasste Bild in einer vertikalen Richtung skaliert. Dies ist vor allem von Vorteil bei der Bearbeitung und Wiedergabe von Aufnahmebereichen, die hinter dem Fahrzeug, aber auch vor dem Fahrzeug liegen. Eine Skalierung kann beispielweise bei einer Rückwärtsfahrt (Rückwärtseinparken) stattfinden. Hier lassen sich Bereiche direkt hinter dem Fahrzeug durch eine Skalierung vergrößert (verbreitert) anzeigen, wohingegen entferntere Bereiche (Horizontblick) gestaucht wiedergegeben werden.

In einer vorteilhaften Ausgestaltung ist die Berechnungseinheit dazu angepasst, das von der Aufnahmeeinheit erfasste Bild des Aufnahmebereiches jeweils mit einem Skalierungsfaktor in der horizontalen Richtung bzw. der vertikalen Richtung zu skalieren, wobei der Skalierungsfaktor für die Skalierung in der horizontalen Richtung in Abhängigkeit eines horizontalen Bildwinkels des erfassten Bildes des Aufnahmebereiches entsprechend einer ersten Abbildungsfunktion bestimmt wird, und der Skalierungsfaktor für die Skalierung in der vertikalen Richtung in Abhängigkeit eines vertikalen Bildwinkels des erfassten Bildes des Aufnahmebereiches entsprechend einer zweiten Abbildungsfunktion bestimmt wird. In anderen Worten, das erfasste Bild des Aufnahmebereiches kann in zwei Richtungen bearbeitet werden und je nach Fahrsituation können entsprechende Bereiche angepasst werden. Eine Skalierung kann beispielweise bei einem Rückwärtseinparken stattfinden. Hier lassen sich Bereiche direkt hinter dem Fahrzeug durch eine Skalierung in vertikaler Richtung vergrößert (verbreitert) anzeigen, wohingegen entferntere Bereiche (Horizontblick) in vertikaler Richtung gestaucht wiedergegeben werden. Zusätzlich lassen sich Bereiche in der horizontalen Richtung, die Objekte enthalten, die beim Einparken von Bedeutung sind (weitere Fahrzeuge, Begrenzungsmauer, Bordstein), in horizontaler Richtung vergrößert darstellen und andere Bereiche, die von geringer Bedeutung sind, z.B. Randbereiche, die keinen Einfluss auf den Einparkvorgang haben, können in der horizontalen Richtung gestaucht/verkleinert angezeigt werden.

In einer vorteilhaften Ausgestaltung ist die Aufnahmeeinheit derart am Fahrzeug angebracht, dass das erfasste Bild des Aufnahmebereiches die Sichtfelder II und IV nach ECE-Regelung ECE R46 enthält. Somit kann das System beispielsweise als Ersatz für einen Hauptspiegel, der an einem Nutzfahrzeug für die Anzeige des Sichtfeldes II verwendet wird, und für einen Weitwinkelspiegel dienen, der an einem Nutzfahrzeug für die Anzeige des Sichtfeldes IV verwendet wird.

In einer vorteilhaften Ausgestaltung ist die Aufnahmeeinheit derart am Fahrzeug angebracht, dass das erfasste Bild des Aufnahmebereiches sowohl einen Bereich direkt hinter dem Fahrzeug als auch einen Bereich, der dem Horizontblick entspricht, enthält. Hierdurch kann das System zusätzlich zu einem Fahrzeug mit Innenrückspiegel verwendet werden, um damit Bereiche direkt hinter dem Fahrzeug anzuzeigen, die auch mit dem Innenrückspiegel nicht einsehbar sind. Das System kann aber insbesondere bei Fahrzeugen eingesetzt werden, die keinen Rückblick durch ein Heckfenster erlauben (z.B. Nutzfahrzeug, Kleintransporter). Generell kann ein System mit dieser vorteilhaften Ausgestaltung bei Rückwärtseinpark- oder Rangiervorgängen vor Rampen verwendet werden.

In einer vorteilhaften Ausgestaltung ist an dem Fahrzeug eine Mehrzahl von Aufnahmeeinheiten zur Erfassung einer Mehrzahl von Aufnahmebereichen angebracht. Hierdurch lassen sich verschiedene Bereiche um das Fahrzeug erfassen und entsprechend der jeweiligen Fahrsituation anpassen.

In einer vorteilhaften Ausgestaltung enthält die Aufnahmeeinheit zwei Aufnahmegeräte, z.B. Kameras, die jeweils ein Teilbild des Aufnahmebereichs erfassen, und die Berechnungseinheit setzt die Teilbilder derart zusammen, dass der Aufnahmebereich in einem gemeinsamen Bild in dem Wiedergabebereich der Wiedergabeeinheit gezeigt wird. Hierdurch lassen sich zum Beispiel die oben genannten Sichtfelder II und IV getrennt voneinander aufnehmen.

### Kurze Beschreibung der Figuren

Nachfolgend wird die Erfindung beispielhaft anhand der beigefügten Figuren beschrieben, in denen
- Fig. 1: eine Draufsicht auf ein Fahrzeug und insbesondere auf einen Aufnahmebereich einer Aufnahmeeinheit während einer Standardfahrsituation (hier Vorwärtsfahrt) zeigt;
- Fig. 2: eine Darstellung eines in einem Wiedergabebereich einer Wiedergabeeinheit gezeigten Bildes, das den Aufnahmebereich aus Fig. 1 wiedergibt, zeigt;
- Fig. 3: einen Funktionsverlauf einer Abbildungsfunktion zeigt, mit welcher das Bild aus Fig. 2 bearbeitet wurde;
- Fig. 4: eine Draufsicht auf ein Fahrzeug und insbesondere auf einen Aufnahmebereich einer Aufnahmeeinheit während einer speziellen Fahrsituation (hier Kurvenfahrt) zeigt;
- Fig. 5: eine Darstellung eines in einem Wiedergabebereich einer Wiedergabeeinheit gezeigten Bildes, das den Aufnahmebereich aus Fig. 4 wiedergibt, zeigt;
- Fig. 6: einen Funktionsverlauf einer Abbildungsfunktion zeigt, mit welcher das Bild aus Fig. 5 bearbeitet wurde;
- Fig. 7: eine Draufsicht auf ein Fahrzeug und insbesondere auf einen Aufnahmebereich einer Aufnahmeeinheit während einer speziellen Fahrsituation (hier Kurvenfahrt) zeigt;
- Fig. 8: eine Darstellung eines in einem Wiedergabebereich einer Wiedergabeeinheit gezeigten Bildes, das den Aufnahmebereich aus Fig. 7 wiedergibt, zeigt;
- Fig. 9: einen Funktionsverlauf einer Abbildungsfunktion zeigt, mit welcher das Bild aus Fig. 8 bearbeitet wurde;
- Fig. 10: eine Draufsicht auf ein Fahrzeug und insbesondere auf einen Aufnahmebereich einer Aufnahmeeinheit während einer speziellen Fahrsituation (hier Kurvenfahrt) zeigt;
- Fig. 11: eine Darstellung eines in einem Wiedergabebereich einer Wiedergabeeinheit gezeigten Bildes, das den Aufnahmebereich aus Fig. 10 wiedergibt, zeigt;
- Fig. 12: einen Funktionsverlauf einer Abbildungsfunktion zeigt, mit welcher das Bild aus Fig. 11 bearbeitet wurde;
- Fig. 13: eine schematische Ansicht des erfindungsgemäßen Sichtsystems ist.
- Fig. 14: eine Draufsicht auf ein Fahrzeug und insbesondere auf einen Aufnahmebereich einer Aufnahmeeinheit während einer Standardfahrsituation (hier Vorwärtsfahrt) zeigt, bei dem der Aufnahmebereich gegenüber dem in Fig. 1 gezeigten Aufnahmebereich in Richtung des Fahrzeuges verschoben ist;
- Fig. 15A: einen beispielhaften Funktionsverlauf einer Abbildungsfunktion zeigt;
- Fig. 15B: einen beispielhaften Funktionsverlauf einer Abbildungsfunktion zeigt;
- Fig. 15C: einen beispielhaften Funktionsverlauf einer Abbildungsfunktion zeigt;
- Fig. 16: in den sequenzweisen Fig. 16A bis 16D jeweils eine Draufsicht auf ein Fahrzeug und insbesondere auf einen Aufnahmebereich einer Aufnahmeeinheit während einer speziellen Fahrsituation (hier Kurvenfahrt) zeigt, wobei die Situation in Fig. 16D eine Variante zu der Situation in Fig. 16C zeigt;
- Fig. 17: in den sequenzweisen Fig. 17A bis 17D jeweils eine Darstellung eines in einem Wiedergabebereich einer Wiedergabeeinheit gezeigten Bildes, das den jeweiligen Aufnahmebereich aus Fig. 16A bis 16D wiedergibt, zeigt;
- Fig. 18: in den sequenzweisen Fig. 18A bis 18D jeweils einen Funktionsverlauf einer Abbildungsfunktion zeigt, mit welcher das jeweilige Bild aus Fig. 17A bis 17D bearbeitet wurde;
- Fig. 19: in den sequenzweisen Fig. 19A bis 19C jeweils eine Draufsicht auf ein Fahrzeug und insbesondere auf einen Aufnahmebereich einer Aufnahmeeinheit während einer speziellen Fahrsituation (hier Kurvenfahrt) zeigt;
- Fig. 20: in den sequenzweisen Fig. 20A bis 20C jeweils eine Darstellung eines in einem Wiedergabebereich einer Wiedergabeeinheit gezeigten Bildes, das den jeweiligen Aufnahmebereich aus Fig. 19A bis 19C wiedergibt, zeigt;
- Fig. 21: in den sequenzweisen Fig. 21A bis 21C jeweils einen Funktionsverlauf einer Abbildungsfunktion zeigt, mit welcher das jeweilige Bild aus Fig. 20A bis 20C bearbeitet wurde;
- Fig. 22: in den sequenzweisen Fig. 22A und 22B jeweils eine Draufsicht auf ein Fahrzeug und insbesondere auf einen Aufnahmebereich einer Aufnahmeeinheit während einer speziellen Fahrsituation (hier Kurvenfahrt) zeigt;
- Fig. 23: in den sequenzweisen Fig. 23A und 23B jeweils einen Funktionsverlauf einer Abbildungsfunktion zeigt, mit welcher das jeweilige abzubildende Bild bearbeitet wurde;
- Fig. 24: eine Draufsicht auf ein Fahrzeug und insbesondere auf einen Aufnahmebereich einer Aufnahmeeinheit während einer speziellen Fahrsituation (hier Kurvenfahrt) zeigt;
- Fig. 25: eine Darstellung eines in einem Wiedergabebereich einer Wiedergabeeinheit gezeigten Bildes, das den Aufnahmebereich aus Fig. 24 wiedergibt, zeigt;
- Fig. 26: einen Funktionsverlauf einer Abbildungsfunktion zeigt, mit welcher das Bild aus Fig. 25 bearbeitet wurde;
- Fig. 27: einen beispielhaften Funktionsverlauf einer Abbildungsfunktion zeigt;
- Fig. 28: einen beispielhaften Funktionsverlauf einer Abbildungsfunktion zeigt;
- Fig. 29: einen beispielhaften Funktionsverlauf einer Abbildungsfunktion zeigt;
- Fig. 30: einen beispielhaften Funktionsverlauf einer Abbildungsfunktion zeigt;
- Fig. 31: eine Darstellung eines in einem Wiedergabebereich einer Wiedergabeeinheit gezeigten Bildes, das mit der Abbildungsfunktion aus Fig. 30 bearbeitet wurde, zeigt;
- Fig. 32: einen beispielhaften Funktionsverlauf einer Abbildungsfunktion zeigt;
- Fig. 33: eine Darstellung eines in einem Wiedergabebereich einer Wiedergabeeinheit gezeigten Bildes, das mit der Abbildungsfunktion aus Fig. 32 bearbeitet wurde, zeigt; und
- Fig. 34: einen beispielhaften Funktionsverlauf einer Abbildungsfunktion zeigt.

### Beschreibung bevorzugter Ausführungsformen

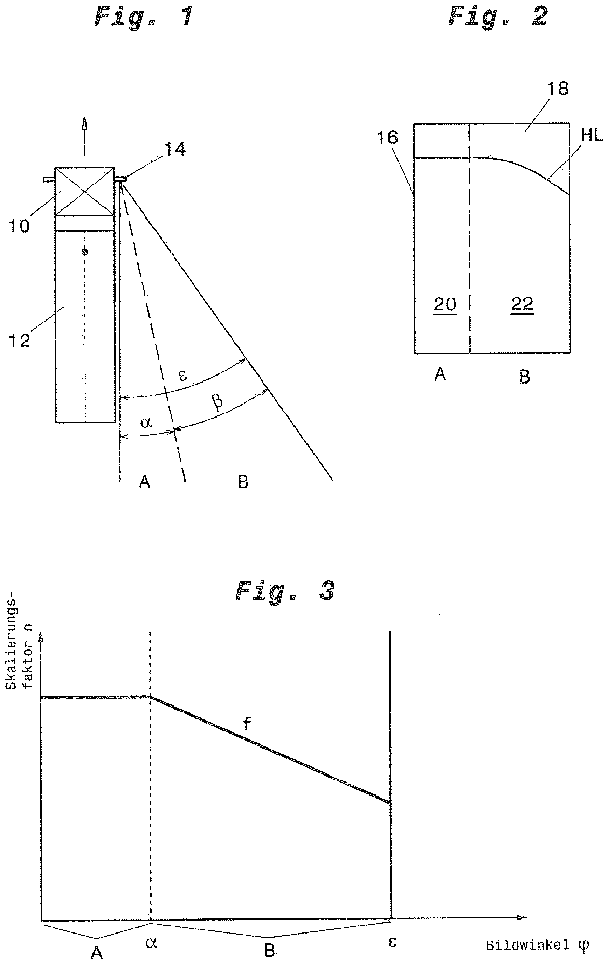

Fig. 1 zeigt eine Draufsicht auf ein Nutzfahrzeug 10 mit Anhänger bzw. Auflieger 12 während einer Standardfahrsituation (hier Vorwärtsfahrt). Ein Anhänger im Sinne der vorliegenden Lehren umfasst Anhänger, die mittels Anhängerkupplung an ein Fahrzeug (Zugmaschine) gekoppelt werden, Auflieger (sogenannte Trailer), die auf den hinteren, abgesenkten Bereich einer Zugmaschine aufgelegt und damit verbunden werden. In allgemeinen Worten ist ein Anhänger ein rückwärtig zur Fahrerkabine eines Nutzfahrzeuges befindlicher und seitlich relativ zur Fahrerkabine beweglicher (ausschwenkbarer) Fahrzeugteil, der bei einer Kurvenfahrt relativ zur Fahrerkabine um eine vertikale Achse schwenkt.

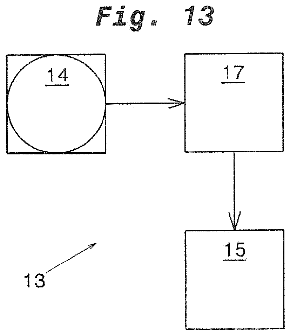

Das Nutzfahrzeug ist mit einem Sichtsystem 13 (siehe Fig. 13) ausgestattet, das eine an dem Nutzfahrzeug 10 angebrachte Aufnahmeeinheit 14, eine Berechnungseinheit 17 und eine Wiedergabeeinheit 15 aufweist. Ein Wiedergabebereich 16 der Wiedergabeeinheit 15 ist in Fig. 2 dargestellt. Der Wiedergabebereich 16 ist in seinen Dimensionen (seiner Wiedergabefläche) vorbestimmt, d.h. begrenzt. Die Aufnahmeeinheit 14 enthält ein Aufnahmegerät, wie beispielsweise eine Kamera oder einen Bildsensor, zum Erfassen und Aufnehmen des gesamten Aufnahmebereichs, der in Fig. 1 als ein Sichtkegel dargestellt ist. Der Sichtkegel ist in zwei Teilsichtkegel (Teilaufnahmebereiche A, B) in der horizontalen Richtung unterteilt. Das Aufnahmegerät ist dabei so ausgelegt, dass es grundsätzlich auch einen größeren Bereich aufnehmen kann, als den in Fig. 1 gezeigten Aufnahmebereich. Daher kann der gezeigte Aufnahmebereich (die Teilaufnahmebereiche A, B) in geeigneter Weise aus dem gesamten aufgenommen Bereich ausgeschnitten sein. Die Berechnungseinheit 17 ist mit der Wiedergabeeinheit 15 im Fahrerhaus des Nutzfahrzeugs angeordnet. Alternativ kann die Berechnungseinheit 15 auch zusammen mit der Aufnahmeeinheit 14 ausgebildet sein oder kann eine separate Einheit oder im Rahmen eines allgemeinen Bordcomputers gebildet sein.

Der in der Fig. 1 dargestellte linke Teilaufnahmebereich A, entspricht in der bevorzugten Ausführungsform dem Sichtfeld eines Hauptspiegels eines Nutzfahrzeuges (Sichtfeld II nach ECE-Regelung ECE R46) und erstreckt sich an seiner rechten Seite parallel zu der Längsachse des Nutzfahrzeuges entlang des Nutzfahrzeuges und um einen horizontalen Bildwinkel α nach rechts von dem Nutzfahrzeug weg. Die vertikale Ausdehnung des Aufnahmebereichs ist so gewählt, dass der Bereich neben und hinter dem Nutzfahrzeug einschließlich einer Horizontlinie HL wiedergegeben werden kann. Im Allgemeinen soll dieser (Teil-) Aufnahmebereich entsprechend dem herkömmlich verwendeten Hauptspiegel keiner bzw. nur einer geringen Verzerrung unterliegen. Die optische Achse des Aufnahmegerätes ist daher bevorzugt so eingestellt, dass in dem Teilaufnahmebereich A wenig bzw. keine Verzerrungen auftreten. Insbesondere ist die optische Achse so eingestellt, dass sie durch ein Zentrum, das dem Flächenschwerpunkt des gesetzlich vorgeschriebenen Sichtfeldes II entspricht, verläuft. Der horizontale Bildwinkel α liegt bevorzugt in einem Bereich zwischen 10 bis 20 Grad.

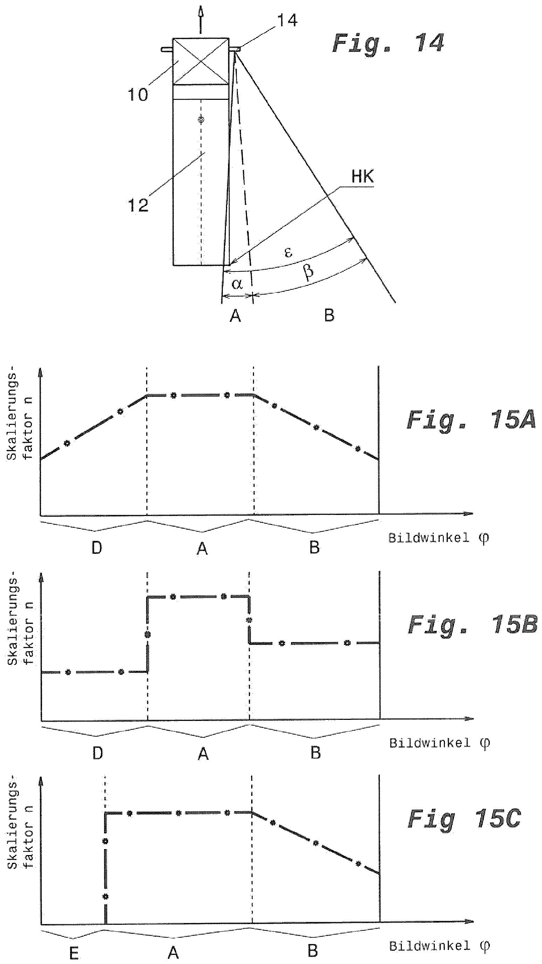

Zur besseren Veranschaulichung ist in der schematischen Darstellung von Fig. 1 der Teilaufnahmebereich A mit einem Abstand von dem Nutzfahrzeug dargestellt. Der Teilaufnahmebereich A kann aber so festgelegt sein, dass er die Fahrzeugseite, zumindest in Richtung des Fahrzeughecks miteinschließt, so dass dieser Bereich in der Wiedergabeeinheit 15 zur besseren Orientierung und Informationsverarbeitung für den Fahrer angezeigt werden kann. Diese Verlegung bzw. Verschiebung des Teilaufnahmebereiches A ist in Fig. 14 dargestellt.

Der in der Fig. 1 dargestellte rechte Teilaufnahmebereich B entspricht in der bevorzugten Ausführungsform dem Sichtfeld eines Weitwinkelspiegels eines Nutzfahrzeuges (Sichtfeld IV nach ECE-Regelung ECE R46) und erstreckt sich an den Teilaufnahmebereich A anschließend um einen horizontalen Bildwinkel β weiter nach rechts (in Blickrichtung nach vorne) von dem Fahrzeug weg. Im Allgemeinen unterliegt dieser Teilaufnahmebereich bei Verwendung eines herkömmlichen Spiegels aufgrund der verwendeten Spiegelart einer Verzerrung. Die Verzerrung wird insbesondere in Fig. 2 anhand der eingezeichneten Horizontlinie HL deutlich. Entsprechend wird auch bei Verwendung eines Kamerasystems dieser Bereich oft verzerrt, d.h. z.B. mittels eines Weitwinkelobjektivs, erfasst. Ein horizontaler Bildwinkel ε, der sich aus der Summe des horizontalen Bildwinkels α und des horizontalen Bildwinkels β ergibt, liegt bevorzugt in einem Bereich zwischen 30 und 90 Grad.

Die Wiedergabeeinheit 15 erhält Daten von der Berechnungseinheit 17, welche wiederum mit Eingangsdaten von der Aufnahmeeinheit 14 versorgt wird. Die (Bild-)Daten der Aufnahmeeinheit 14 werden in der Berechnungseinheit 17 entsprechend aufgearbeitet, um eine zufriedenstellende Darstellung des Aufnahmebereiches (Teilaufnahmebereiche A, B) in dem Wiedergabebereich 16 der Wiedergabeeinheit 15 zu gewährleisten.

In der in Fig. 1 dargestellten Standardfahrsituation (Vorwärtsfahrt) ist es für den Fahrer des Nutzfahrzeuges wichtig, z.B. im Vorfeld eines Überholvorganges, herannahende Fahrzeuge zu erkennen. Daher ist der Bereich des Teilaufnahmebereichs A von größerer Bedeutung für den Fahrer des Nutzfahrzeuges als rechtsliegende Bereiche des Teilaufnahmebereichs B. Da aber auch der Teilaufnahmebereich B Informationen enthält, wenn auch von geringerer Bedeutung, ist es wünschenswert, diese ebenso in dem Wiedergabebereich 16 der Wiedergabeeinheit 15 darzustellen. Aus diesem Grund wird in der vorliegenden Standardfahrsituation der Bereich des Teilaufnahmebereichs A, also der Bereich um den horizontalen Bildwinkel α mit einem konstanten Skalierungsfaktor "n" durch die Berechnungseinheit 17 bearbeitet. Das heißt, dass jeder einzelne Teilbereich des Aufnahmebereiches mit einem horizontalen Bildwinkel kleiner als der horizontale Bildwinkel α mit dem gleichen Skalierungsfaktor "n" skaliert wird. Dies hat zur Folge, dass das diesem (Teil-) Aufnahmebereich entsprechende Teilbild 20, das in dem Wiedergabebereich 16 in dem linken Bereich angezeigt wird, keine Stauchung oder Aufweitung gegenüber dem "originalen" Teilbild erhält. Dem Fahrer des Nutzfahrzeuges wird hierdurch ein ihm von einem Hauptspiegel bekanntes, demnach leicht verständliches Bild angezeigt.

Wie zuvor ausgeführt, enthält auch der Teilaufnahmebereich B für den Fahrer relevante Informationen und Orientierungspunkte, wenn auch von geringerer Bedeutung, zumindest bei Vorwärtsfahrt. Der gesamte Bereich über das Sichtfeld B, also der Bereich um den horizontalen Bildwinkel β (bzw. horizontaler Bildwinkel ε abzüglich horizontaler Bildwinkel a, siehe Fig. 1) würde allerdings in einem unveränderten Zustand nicht als Ganzes in dem vorbestimmten (begrenzten) Wiedergabebereich 16 wiedergeben werden können. Daher wird erfindungsgemäß das erfasste Bild des Bereiches des Teilaufnahmebereichs B mit einem konstant fallenden Skalierungsfaktor (Skalierungsfaktor ist eine lineare Funktion) durch die Berechnungseinheit 17 bearbeitet. Es findet hierdurch eine Stauchung in horizontaler Richtung des Teilaufnahmebereichs B statt, so dass der gesamte Bereich des Teilaufnahmebereichs B als Teilbild 22 in dem Wiedergabebereich 16 der Wiedergabeeinheit 15 angezeigt werden kann.

Der gesamte Aufnahmebereich (Teilaufnahmebereiche A, B) der Aufnahmeeinheit 14 wird demnach durch die Berechnungseinheit 17 mittels der in Fig. 3 gezeigten Abbildungsfunktion n = f(ϕ) bearbeitet (wobei ϕ dem jeweiligen (horizontalen) Bildwinkel entspricht). Mit anderen Worten, das in dem Wiedergabebereich 16 angezeigte Bild des Aufnahmebereiches (Teilaufnahmebereiche A, B) wird in Abhängigkeit des horizontalen Bildwinkels in seiner Rechts-Links-Ausdehnung (horizontaler Ausdehnung) skaliert.

Diese Skalierung findet fahrsituationsabhängig statt, d.h. in der Ausführungsform nach Fig. 1 bis Fig. 3 wird bei der Standardfahrsituation "Vorwärtsfahrt" das durch die Aufnahmeeinheit 14 erfasste Bild des Aufnahmebereichs (Teilaufnahmebereiche A, B) mit der in Fig. 3 gezeigten Abbildungsfunktion f(ϕ) skaliert.

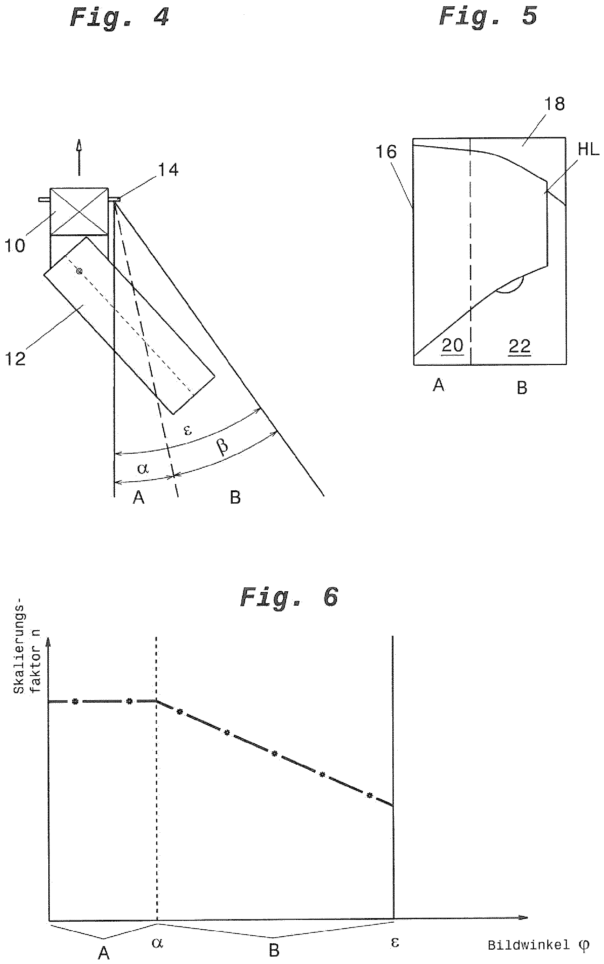

Fig. 4 zeigt eine Draufsicht auf das Nutzfahrzeug 10 mit Auflieger 12 aus Fig. 1 während einer speziellen Fahrsituation, d.h. während einer Kurven-Vorwärtsfahrt. Das Nutzfahrzeug 10 ist mit dem oben beschrieben Sichtsystem ausgestattet.

Das Aufnahmegerät der Aufnahmeeinheit 14 erfasst auch hier ein Bild der Teilaufnahmebereiche A, B und versorgt die Berechnungseinheit 17 mit (Bild-)Daten. Auch in dieser Fahrsituation werden die Bilddaten von der Berechnungseinheit 17 entsprechend bearbeitet und auf der Wiedergabeeinheit 15 ausgegeben. Dabei verwendet die Berechnungseinheit 17 für die Skalierung des erfassten Bildes des Aufnahmebereiches die gleiche Abbildungsfunktion, die für die Standardfahrsituation "Vorwärtsfahrt" verwendet wird (siehe Fig. 1). Das sich durch die Skalierung ergebene Bild wird in dem Wiedergabebereich 16 der Wiedergabeeinheit 15 angezeigt.

Wenn keine spezielle Anpassung hinsichtlich der Verwendung der Abbildungsfunktion an die spezielle Fahrsituation stattfindet, füllt, wie deutlich in Fig. 5 erkennbar ist, der Auflieger des Nutzfahrzeuges einen Großteil des Bildes 18 (Teilbilder 20, 22) aus, und Bereiche, die für den Fahrer wichtige Informationen enthalten können, z.B. der rechte Bereich des Teilbildes 22, rückt aufgrund seiner geringen Breite in den Hintergrund, und Informationen dieses Bereiches können nicht schnell und zuverlässig von den Fahrer erfasst werden.

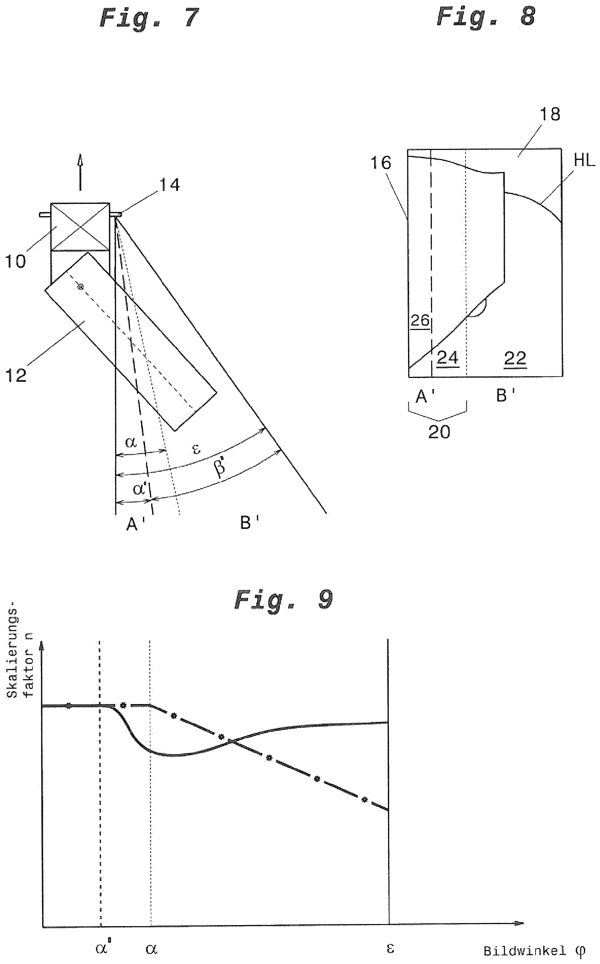

Es wird daher in dieser speziellen Fahrsituation eine Abbildungsfunktion gemäß Fig. 9 vorgeschlagen. Fig. 7 zeigt die dazugehörige Draufsicht auf das Nutzfahrzeug, insbesondere auf die gegenüber den in Fig. 1 und 4 abgewandelten Teilaufnahmebereiche A' und B' unter Beibehaltung des gesamten horizontalen Bildwinkels ε. Im Speziellen wird in dieser Ausführungsform, die eine Anpassung der Abbildungsfunktion an die spezielle Fahrsituation berücksichtigt, der Teilaufnahmebereich A auf den Teilaufnahmebereich A' verjüngt bzw. der dazugehörige horizontale Bildwinkel α des Teilaufnahmebereichs A wird auf den horizontalen Bildwinkel α' verkleinert. Im Gegensatz dazu wird der Teilaufnahmebereich B auf den Teilaufnahmebereich B' vergrößert bzw. der horizontale Bildwinkel β auf den horizontalen Bildwinkel β' vergrößert.

Das erfasste (Teil-)Bild des Teilaufnahmebereichs A wurde in der oben beschriebenen Standardfahrsituation "Vorwärtsfahrt" mit einem konstanten Skalierungsfaktor n ≈ 1 bearbeitet. Auch in der vorliegenden speziellen Fahrsituation wird das erfasste (Teil-)Bild des Teilaufnahmebereichs A' mit einem konstanten Skalierungsfaktor durch die Berechnungseinheit 17 bearbeitet, d.h. es findet keine Verjüngung/ Stauchung oder Aufweitung in diesem Bereich statt. Hingegen wird erfasste (Teil-)Bild des Teilaufnahmebereichs B' durch die Berechnungseinheit 17 entsprechend der in Fig. 9 abgebildeten Abbildungsfunktion bearbeitet. Insbesondere findet hier in den an den horizontalen Bildwinkel α' angrenzenden Bildbereich eine Skalierung statt, die bewirkt, dass der entsprechende Bereich in dem Wiedergabebereich 16 der Wiedergabeeinheit 15 gestaucht wird. Die "Stauchung" wird dabei vornehmlich in dem Bereich durchgeführt, der den Auflieger zeigt, da dieser Bereich keine relevanten Informationen bzw. nur Informationen von geringer Bedeutung für den Fahrer enthält.

Das Teilbild 20 aus Fig. 1 und 3 entspricht den Teilbildern 24 und 26 in Fig. 8. Insbesondere unterliegt das Teilbild 24 und der linke Bereich des Teilbildes 22 der oben beschrieben Stauchung. Dadurch kann der rechte Bereich des Teilbildes 22 entsprechend unter Anwendung der Abbildungsfunktion nach Fig. 9 skaliert, d.h. ausgeweitet werden und somit ein Bereich geschaffen werden, der ausreichend groß und gut erfassbar für den Fahrer ist, so dass Hindernisse oder andere Verkehrsteilnehmer gut erfasst werden können. Relevante Informationen aus diesem Bereich können demnach unter Ausnutzung der zur Verfügung stehenden Größe des Wiedergabebereiches schnell und zuverlässig erfasst werden.

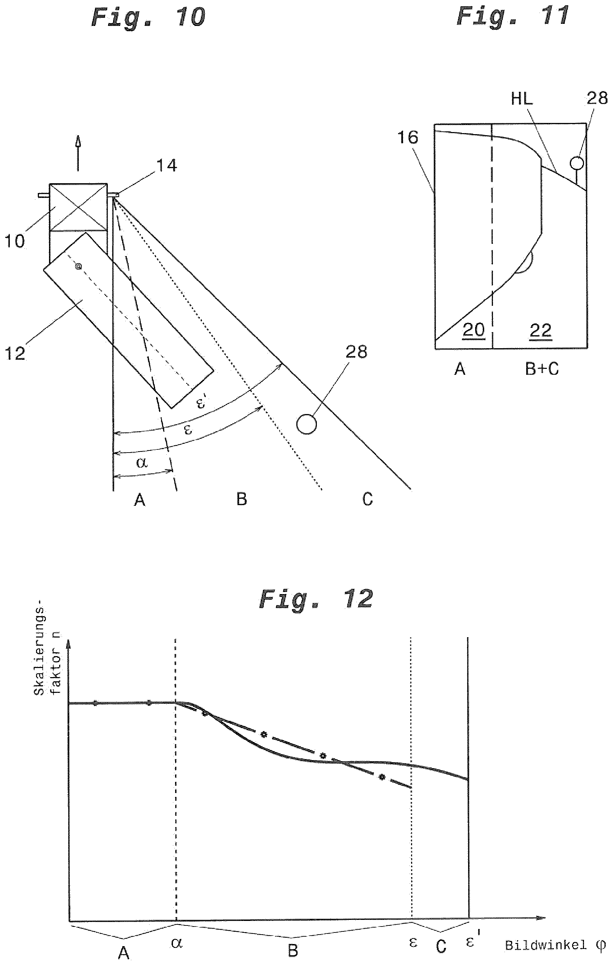

In Fig. 10 bis 12 wird eine alternative Ausführungsform bezüglich der speziellen Fahrsituation nach Fig. 4 und 7 dargestellt.

In dieser Ausführungsform werden die in Fig. 1 und 4 gezeigten Teilaufnahmebereiche A, B und die dazugehörigen horizontalen Bildwinkel α und β beibehalten.

Wie bereits oben beschrieben, ist das Aufnahmegerät so ausgelegt, dass es einen größeren Bereich aufnehmen kann, als den in Fig. 1 gezeigten bzw. verwendeten Aufnahmebereich (Teilaufnahmebereiche A, B). Daher ist in der in Fig. 10 gezeigten Ausführungsform der Aufnahmebereich um einen Teilaufnahmebereich C erweitert, der in geeigneter Weise aus dem gesamten aufgenommen Bereich des Aufnahmegeräts zusätzlich ausgeschnitten ist. Der Teilaufnahmebereich C schließt direkt an den Teilaufnahmebereich B an.

Der Teilaufnahmebereich A wird mittels der Berechnungseinheit 17 wie bereits in der Ausführungsform nach Fig. 1 bis 3 beschrieben bearbeitet, d.h. mit einem konstanten Faktor "n" (n ≈ 1) skaliert.

Der Wiedergabebereich 16 der Wiedergabeeinheit 15 weist, wie oben beschrieben, eine vorbestimmte Breite auf. Demzufolge werden die erfassten (Teil-)Bilder der Teilaufnahmebereiche B und C unter Anwendung der in Fig. 12 gezeigten Abbildungsfunktion skaliert, so dass beide erfassten (Teil-)Bilder der Teilaufnahmebereiche B und C in dem Teilbild 22 (welches in der Ausführungsform nach Fig. 1 bis 3 nur den Teilaufnahmebereich B wiedergibt), angezeigt werden können. Es findet hier eine Stauchung der erfassten (Teil-)Bilder des Teilaufnahmebereichs C statt.

Durch die Erweiterung des Aufnahmebereichs durch den Teilaufnahmebereich C können Informationen, die ausgehend von dem Nutzfahrzeug weiter rechts liegen, erfasst werden. In Fig. 10 und 11 ist beispielsweise schemenhaft ein Baum dargestellt, der durch den Einbezug des Teilaufnahmebereichs C erfasst und entsprechend in dem Wiedergabebereich 16 dargestellt wird.

Die jeweiligen Wiedergabebereiche 16 der oben beschriebenen Ausführungsformen sind schematisch dargestellt. Es versteht sich, dass die jeweiligen Bilder 18 (bzw. Teilbilder 20, 22, 24, 26) Markierungen (Informationen) zur besseren Orientierung enthalten können. Beispielhaft können Straßenmarkierungen, Leitlinien oder visuelle oder virtuelle Hilfsmarkierungen/-linien etc. mit dargestellt sein, die in den jeweiligen Bereichen entsprechend der Fahrsituation (mit)skaliert werden, so dass eine Orientierung für den Fahrer, insbesondere bezüglich des Fahrzeuges beibehalten werden kann.

Das oben beschriebene Sichtsystem wurde in den Ausführungsformen in Zusammenhang mit einem Nutzfahrzeug mit Auflieger beschrieben. Das Sichtsystem kann aber an jedem anderen Fahrzeug, wie beispielsweise einem Nutzfahrzeug mit Anhänger, zum Einsatz kommen.

In den oben beschriebenen Ausführungsformen wurde die Vorwärtsfahrt als Standardfahrsituation und die Vorwärts-Kurvenfahrt als spezielle Fahrsituation beschrieben. Darüber hinaus kann die erfindungsgemäße Bearbeitung des Aufnahmebereiches in Abhängigkeit weiterer Fahrsituationen angewendet werden. Solche Fahrsituationen enthalten beispielsweise Abbiegevorgang, gerades Rückwärtsfahren, Kurvenrückwärtsfahrt.

Je nach vorliegender (spezieller) Fahrsituation ist das Sichtsystem so ausgelegt, eine bestimmte Abbildungsfunktion zu verwenden, dies unter Beibehaltung des horizontalen Bildwinkels ε oder mit einer Erweiterung des Aufnahmebereiches durch einen weiteren Teilaufnahmebereich. Grundsätzlich liegen in Abhängigkeit der jeweiligen Fahrsituation entsprechende Abbildungsfunktionen vor, die unterschiedliche Funktionsverläufe aufweisen. Zum Einen kann der Funktionsverlauf ungleich konstant sein, d.h. zwischen zwei konstanten Verläufen liegt ein Sprung vor, der dann auch im Wiedergabebereich 16 entsprechend erkennbar ist. Damit lässt sich beispielsweise das dargestellte Bild 18 im Wiedergabebereich 16 klar verständlich unterteilen. Diese Grenze kann bevorzugt auch deutlich erkennbar gestaltet werden (z.B. schwarzer Balken). Eine der konstanten Funktionen weist dabei einen Skalierungsfaktor von etwa 1 auf, d.h. es liegt keine Stauchung oder Streckung vor.

Bei einer Abbildungsfunktion mit einem konstanten Bereich und einem nicht konstanten Bereich (siehe Fig. 3, 9 und 12), kann ebenso die Grenze zwischen dem kontanten und dem nicht konstanten Bereich deutlich erkennbar gestaltet werden. Dies kann von Vorteil sein, wenn der konstante Bereich einem Hauptspiegelbereich entspricht und der nicht konstante Bereich einem Weitspiegelbereich entspricht und damit dem Fahrer die Bilder der unterschiedlichen Spiegel verdeutlicht werden.

Des Weiteren kann die Abbildungsfunktion stetig verlaufen. In einer stetig verlaufenden Abbildungsfunktion sind keine Sprünge in der Bilddarstellung im Wiedergabebereich vorhanden. Sofern die Abbildungsfunktion stetig differenzierbar ist, können auch Knicke in der Bilddarstellung ausgeschlossen werden. Somit wird dem Fahrer ein ergonomisch günstiges, ihn nicht irritierendes Bild vermittelt.

Weiterhin kann die Abbildungsfunktion in dem nicht konstanten Bereich linear, nicht linear, stetig fallend, stetig steigend verlaufen.

Eine Anpassung der Abbildungsfunktion an die jeweilige Fahrsituation kann durch Änderungen im Funktionsverlauf in jeweiligen Teilbereichen erfolgen. Solche Änderungen beinhalten beispielsweise Änderungen der Steigung, Änderung der Krümmung oder Verlängerung bzw. Verkürzung eines vorhandenen konstanten Bereiches bzw. Festlegen eines konstanten Bereiches. Die jeweiligen Abbildungsfunktionen können im Vorfeld für Standardfahrsituationen und für spezielle Fahrsituationen festgelegt werden. Optional kann die Abbildungsfunktion manuell über eine von dem Fahrer zu bedienende Eingabevorrichtung, die mit der Berechnungseinheit 17 gekoppelt ist, geändert werden.

Die jeweilige Fahrsituation kann automatisch erkannt werden und/oder manuell eingegeben werden. Für die manuelle Eingabe kann beispielsweise die oben genannte Eingabevorrichtung vorgesehen sein. Die automatische Erkennung kann beispielsweise durch Sensoren bewirkt werden. Die Sensoren können fahrspezifische Merkmale erfassen, wie beispielsweise Geschwindigkeit, Lenkwinkel, Knickwinkel Auflieger relativ zum Nutzfahrzeug, Knickwinkel Anhänger relativ zum (Nutz-)Fahrzeug, Blinkerstellung, Fahrrichtung, Stellung Gangschaltung, Entfernungsmesser für Einpark-/Rangiermanöver.

Die oben beschriebene Aufnahmeeinheit enthält ein einzelnes Aufnahmegerät 14. Es ist ebenso möglich zwei (oder mehrere) Aufnahmegeräte (Kamera, Bildsensor) zu verwenden. In diesem Fall kann die Aufnahmeeinheit 14 derart gestaltet sein, dass ein erstes Bild und ein zweites Bild, die unterschiedliche Bildwinkel haben, von den zwei Aufnahmegeräten erzeugt werden. Dabei nimmt die erste Kamera bzw. Bildsensor ein erstes Bild auf, das das Sichtfeld des Hauptspiegels beinhaltet und vorzugsweise mit großer Auflösung und im Wesentlichen unverzerrt aufgenommen wird, das heißt mit einem Bildwinkel, der dem Bildwinkel der natürlichen Wahrnehmung des Menschen entspricht, während die zweite Kamera bzw. Bildsensor ein zweites Bild erzeugt, das zumindest eine Weitwinkelrichtung mit einem Bildwinkel größer als dem des natürlichen Eindrucks des Auges aufweist und das Sichtfeld eines Weitwinkelspiegels (Sichtfeld IV) abbildet. Die Berechnungseinheit ist dabei so angepasst, aus den beiden getrennten Bildern ein gemeinsames Bild zu generieren und dieses abhängig von der Fahrsituation zu skalieren oder die beiden erzeugten Bilder getrennt voneinander abhängig von der Fahrsituation zu skalieren und danach ein gemeinsames Bild zu generieren. In beiden Fällen werden die Bilddaten des gemeinsamen Bildes an die Wiedergabeeinheit zur Anzeige im Wiedergabebereich ausgegeben.

In den oben beschriebenen Ausführungsformen entspricht der durch das einzelne Aufnahmegerät erfasste Aufnahmebereich im Allgemeinen den Sichtfeldern II und IV. Das Aufnahmegerät kann aber auch derart konfiguriert sein, dass es weitere Bereiche außerhalb der Sichtfelder II und IV erfasst.

Wird das erfindungsgemäße Sichtsystem auf beiden Seiten des Fahrzeugs angewendet, so sind (nicht dargestellt in Fig. 1, 4, 7, 10) entsprechende zusätzliche Kameras oder andere Aufnahmeeinheiten sowie ggf. eine weitere Wiedergabeeinheit für die zweite Seite des Nutzfahrzeugs vorgesehen. Die Berechnungseinheit kann nach Bedarf gemeinsam für beide Seiten des Fahrzeugs verwendet werden oder aber es wird auch eine separate Berechnungseinheit für jede Seite des Fahrzeugs vorgesehen. Ebenso können mehrere Eingabevorrichtungen vorgesehen sein.

Ebenso ist die Position der Aufnahmeeinheit nicht auf die rechte und/oder linke Seite des Fahrzeuges zur Erfassung des Aufnahmebereichs entsprechend der Sichtfelder II und IV beschränkt und kann an jeder anderen Position an dem Fahrzeug zur Erfassung anderer Aufnahmebereiche installiert sein. So können beispielsweise die ECE-R 46 Sichtfelder V und/oder VI erfasst werden. Das Sichtfeld V entspricht dem durch einen sogenannten Rampenspiegel erfassten Aufnahmebereich, der sich auf der fahrerabgewandten Seite des Fahrzeuges seitlich unmittelbar neben dem Fahrerhaus befindet (d.h. in Deutschland auf der rechten Fahrzeugseite) und somit Bereiche wiedergibt, die von dem Fahrer nicht direkt einsehbar sind. Dieser Bereich ist insbesondere bei Abbiegevorgängen von hoher Bedeutung und kann beispielsweise Fahrradfahrer direkt neben dem Fahrzeug erfassen. Das Sichtfeld VI entspricht dem durch einen sogenannten Frontspiegel erfassten Aufnahmebereich, der sich direkt vor dem Fahrzeug befindet. Dieser Bereich ist beispielsweise bei Anfahrvorgängen vor Kreuzungen oder Fußgängerübergängen (Zebrastreifen) von hoher Bedeutung und kann beispielsweise Fußgänger erfassen, die sich (noch) vor dem Fahrzeug befinden. Auch bei der Erfassung der Sichtfelder V und VI, die mit zwei aber auch einer Kamera möglich ist, kann abhängig von der Fahrsituation das erfasste Bild mit einer Abbildungsfunktion bearbeitet werden. D.h. bei einem Abbiegevorgang wird der direkt rechts (oder links) neben dem Fahrzeug befindliche Bereich derart skaliert, dass dieser vergrößert dargestellt wird und der Bereich vor dem Fahrzeug entsprechend gestaucht in der Wiedergabeeinheit wiedergegeben wird. Bei einem Anfahrvorgang findet eine entsprechend umgekehrte Skalierung statt, d.h. der Bereich neben dem Fahrzeug wird gestaucht und der Bereich vor dem Fahrzeug entsprechend aufgeweitet. In diesem Zusammenhang ist auch denkbar, dass das Sichtfeld V um die Sichtfelder II und IV erweitert wird.

Zusätzlich ist es möglich, die Aufnahmeeinheit auch an einem Heck eines Fahrzeuges anzubringen. Eine solche Position ist insbesondere für Rückwärtsfahrten (z.B. Einparken, Rangieren vor Rampenbereichen) von Vorteil und kann auch zur Überwachung des hinter dem Fahrzeug liegenden Bereiches dienen, insbesondere bei Fahrzeugen, die keine Sicht durch ein Heckfenster ermöglichen. In diesem Fall würde der Aufnahmebereich einen ersten Teilaufnahmebereich mit einem vertikalen Bildwinkel aufweisen, der so ausgerichtet ist, dass ein unmittelbar hinter dem Fahrzeug liegender Bereich möglichst verzerrungsfrei erfasst wird. Weiterhin würde der Aufnahmebereich einen zweiten Teilaufnahmebereich B mit einem vertikalen Bildwinkel aufweisen, der so ausgerichtet ist, dass ein Bereich, der dem Horizontblick entspricht, erfasst wird. Die beiden neu definierten Teilaufnahmebereiche können einander übergehen, können aber auch einen Aussparungsbereich dazwischen angeordnet aufweisen, der dann in dem Wiedergabebereich entsprechend markant dargestellt werden kann (schwarzer Balken).

Die beiden neu definierten Teilaufnahmebereiche bzw. die erfassten Bilder dieser Teilaufnahmebereiche werden dann in analoger Weise durch die Berechnungseinheit bearbeitet, d.h. es findet eine Skalierung in Abhängigkeit von Fahrsituation und vertikalem Bildwinkel statt. Dadurch kann beispielsweise bei einem Rückwärtseinparkvorgang unter Anwendung einer fahrsituationsbedingten Abbildungsfunktion das erfasste Bild des unteren Teilaufnahmebereichs (das den unmittelbar hinter dem Fahrzeug liegenden Bereich umfasst) in der vertikalen Richtung skaliert werden und aufgeweitet (vergrößert) wiedergegeben werden, und das Bild des oberen Teilaufnahmebereichs (Horizontblick) entsprechend in der vertikalen Richtung skaliert werden und gestaucht wiedergegeben werden, um damit den begrenzten Wiedergabebereich der Wiedergabeeinheit optimal auszunutzen. Andererseits kann bei einer Vorwärtsfahrt durch eine Skalierung gemäß der fahrsituationsbedingten Abbildungsfunktion das Bild des oberen Teilaufnahmebereichs entsprechend skaliert und aufgeweitet (vergrößert) dargestellt werden und das Bild des unteren Teilaufnahmebereichs entsprechend skaliert und gestaucht angezeigt werden. In beiden Fällen wird das Augenmerk bzw. Aufmerksamkeit des Fahrers auf Bereiche gelenkt, die in der spezifischen Fahrsituation relevante Informationen enthalten.

Zusätzlich ist eine Kombination der in Zusammenhang mit den Figuren beschrieben Skalierung in Abhängigkeit von Fahrsituation und horizontalem Bildwinkel, und der Skalierung in Abhängigkeit von Fahrsituation und vertikalem Bildwinkel möglich. Entsprechende Aufnahmeeinheiten, Berechnungseinheit(en), Wiedergabeeinheit(en) und Eingabevorrichtung(en) sind in dem Fahrzeug dann vorzusehen.

Zusätzlich ist der Bildwinkel nicht nur, wie oben beschrieben, auf einen horizontalen und/oder vertikalen Bildwinkel beschränkt und kann jeder von dem horizontalen und vertikalen Bildwinkel unterschiedliche Winkel (radialer Winkel) sein.

In Figur 1 ist der Teilaufnahmebereich A mit einem Abstand von dem Nutzfahrzeug dargestellt. Aus Gründen der besseren Orientierung und Informationsverarbeitung für den Fahrer kann der Teilaufnahmebereich A auch so festgelegt sein, dass er die Fahrzeugseite, zumindest in Richtung des Fahrzeughecks und somit mindestens die hintere seitliche Kante (Heckkante HK) des Anhängers bzw. Auflegers bei gerader Ausrichtung des Anhängers bzw. Aufliegers miteinschließt (siehe Fig. 14).

Die Heckkante HK des Anhängers bzw. Trailers wandert bei Kurvenfahrten (oder Abbiegevorgängen oder Rangiervorgängen) über einen bestimmten Winkel, der in Abhängigkeit der Größe (des Winkelbereichs) des Teilaufnahmebereichs A derart ist, dass die Heckkante HK des Anhängers bzw. Aufliegers den Teilaufnahmebereich A verlässt und in den Teilaufnahmebereich B gelangt, in dem eine Verzerrung stattfindet. Da der Fahrer damit die Heckkante HK verzerrt dargestellt bekommt, kann dies zur Verschlechterung der Orientierung und Informationsverarbeitung für den Fahrer führen.

Daher werden für eine weitere verbesserte Orientierung und Informationsverarbeitung für den Fahrer in den nachfolgenden Ausführungsformen Abbildungsfunktion angewendet, die gewährleisten, dass die Heckkante HK des Anhängers bzw. des Aufliegers stets in einem unverzerrten oder nahezu unverzerrten (nicht gestauchten) Bereich des wiedergegebenen Bildes 18 liegt bzw. dargestellt wird.

Grundsätzlich werden in den Figuren unverzerrte bzw. nahezu unverzerrte (Teilaufnahme-) Bereiche (nichtgestauchte Bereiche) mit A, A', A1 und A2 angezeigt und entsprechen in der Regel dem/einem Teilbild 20 des Bildes 18.

In den Figuren 15A bis 15C sind schematisch Beispiele für einen beispielhaften Funktionsverlauf einer Abbildungsfunktion über einen Bildwinkel ϕ gezeigt, die jeweils einen unverzerrten Teilaufnahmebereich A über einen gewissen Bereich des Bildwinkels ϕ aufweisen, in welchem, wie später noch detailliert an Ausführungsbeispielen beschrieben und in Figuren gezeigt, die Heckkante HK liegt. Dieser unverzerrte Teilaufnahmebereich 1 hat eine Verzerrung n (ϕ) = 1, d.h. zusätzlich zur ohnehin vorgesehenen Verkleinerung, um das aufgenommene Bild an den Wiedergabebereich anzupassen, findet keine Stauchung oder Streckung in einer Bildrichtung statt.

Rechts des Teilaufnahmebereichs A (Blickrichtung nach vorne) schließen sich jeweils Teilaufnahmebereiche B an. Gemäß der vorgeschlagenen Abbildungsfunktionen findet in diesem Teilaufnahmebereich B eine Skalierung mit einem Faktor ungleich 1 statt, so dass hier eine Verzerrung, in der Regel eine Stauchung des aufgenommen Bereiches in dem widergegebenen Bild 18 (Teilbild 22, 24, 26) in diesem Teilaufnahmebereich erzielt wird. Ein weiterer, nicht sichtbarer verzerrter Bereich liegt links des unverzerrten Teilaufnahmebereichs A, wobei hier eine Stauchung mit n = 0 stattfindet, d.h. dieser Bereich wird auf der Wiedergabeeinheit nicht dargestellt.

Die Skalierung, sprich der Funktionsverlauf, kann verschiedene Verläufe aufweisen. In Fig. 15A und 15C ist ein linear fallender Funktionsverlauf dargestellt, so dass eine Verzerrung/Stauchung zum Bildrand (d.h. zum Rand des aufgenommenen Bereiches) zunimmt. Bei aufgenommenen Bildern, die zum Bildrand hin eine Verzerrung durch einen Weitwinkel aufweisen, kann durch die zunehmende Stauchung der Weitwinkeleffekt ausgeglichen werden. In Fig. 15B ist ein konstanter Funktionsverlauf dargestellt, so dass eine Verzerrung/Stauchung des ursprünglichen aufgenommenen Bildes zum Bildrand gleichbleibend ist.

Links des Teilaufnahmebereichs A schließen sich in Fig. 15A bis 15C jeweils Teilaufnahmebereiche D bzw. E an. Gemäß der vorgeschlagenen Abbildungsfunktionen findet in den Teilaufnahmebereichen D eine Skalierung mit einem Faktor ungleich 1 statt, so dass hier eine Verzerrung, in der Regel eine Stauchung des aufgenommen Bereiches in dem widergegebenen Bild 18 (Teilbild 22, 24, 26) in diesem Teilaufnahmebereich erzielt wird. Auch hier kann die Skalierung, sprich der Funktionsverlauf, verschiedene Verläufe aufweisen. In Fig. 15A ist ein linear fallender Funktionsverlauf dargestellt, und in Fig. 15B ist ein konstanter Funktionsverlauf dargestellt. In Fig. 15C ist ein Extremfall einer Skalierung dargestellt, bei der der Faktor Null beträgt. In anderen Worten findet hier eine "komplette" Stauchung des Teilaufnahmebereiches E statt, so dass dieser nicht mehr dargestellt wird.

Wie der Fig. 15B zu entnehmen ist, weist die gesamte Abbildungsfunktion keinen stetigen Verlauf auf, vielmehr kommt es am Übergang zwischen den Teilaufnahmebereichen A und B bzw. D zu einem Sprung in dem Funktionsverlauf. Selbstverständlich kann auch nur ein Sprung im Funktionsverlauf vorhandenen oder mehrere Sprünge, sofern weitere Bereiche mit unterschiedlichen Funktionsverläufen vorgesehen sind. Weiterhin kann die Abbildungsfunktion auch diverse Kombinationen aus nicht konstant verlaufenden Bereichen, linear verlaufenden Bereichen, nicht linear verlaufenden Bereichen, stetig fallend verlaufenden Bereichen, stetig steigend verlaufenden Bereichen usw. enthalten.

Grundsätzlich kann der Teilaufnahmebereich A als feste Größe so gewählt werden, dass die Heckkante HK stets in dem unverzerrten Bereich verbleibt, auch bei einer Kurvenfahrt über einen gewissen Winkel hinaus. Diese Festlegung kann auch in den oben beschriebenen Ausführungsformen angewendet werden. Dies kann allerdings zu einer ungewollten und zu großen Verkleinerung des verzerrten Bereiches und dessen Darstellung im Bild 18 führen oder aber auch dazu, das die Heckkante HK letztendlich den unverzerrten Bereich verlässt, so dass dazu eine dynamische Anpassung der Größe des unverzerrten Bereiches, d.h. eine dynamische Anpassung der Abbildungsfunktion in Abhängigkeit von der relativen Lage der Heckkante HK zum Nutzfahrzeug 10, insbesondere der Fahrerkabine bzw. Zugmaschine, wo die Aufnahmeeinheit sitzt, stattfindet.

Verschiedene Möglichkeiten zur Anpassung des Teilaufnahmebereiches A werden in den nachfolgenden Ausführungsformen beschrieben.

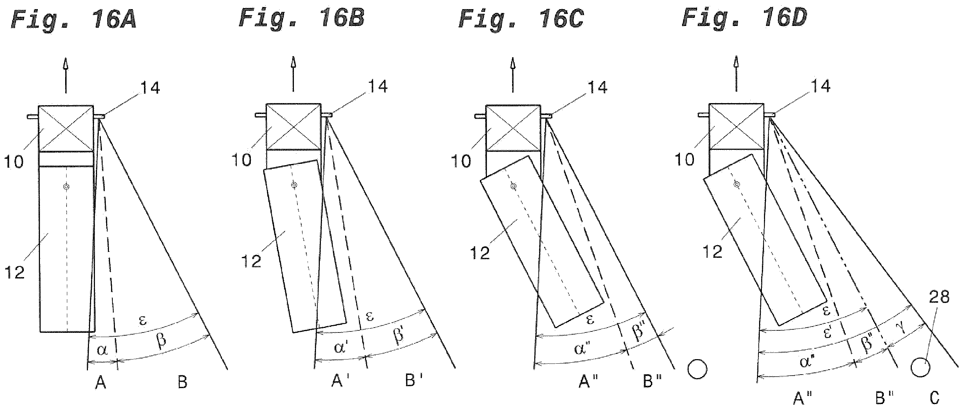

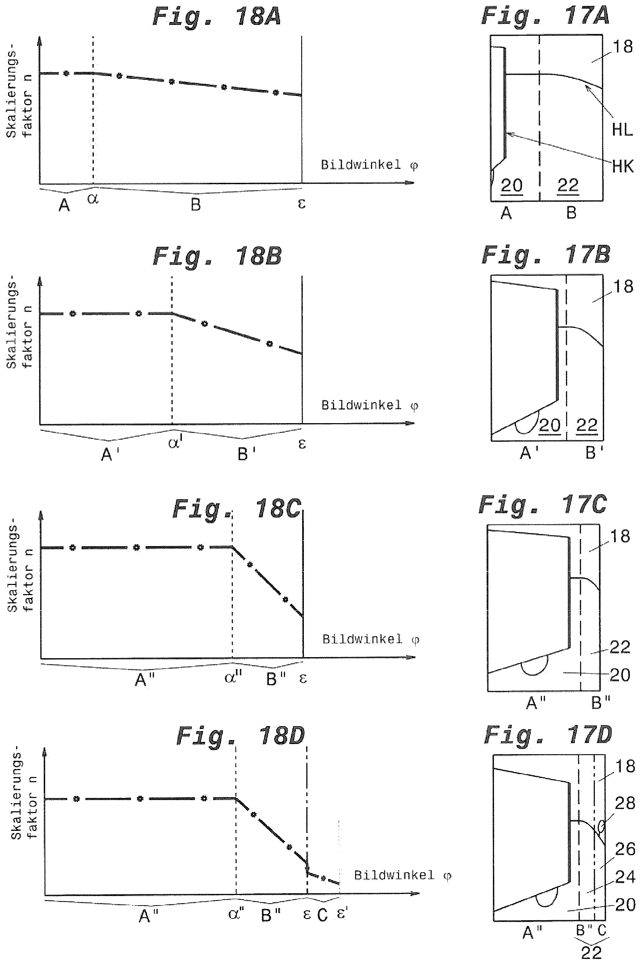

Erfindungsgemäß wird daher in der speziellen Fahrsituation eine Abbildungsfunktion gemäß Fig. 18A bis 18C bzw. 18D vorgeschlagen. Fig. 16A bis 16C zeigen die dazugehörigen Draufsichten auf das Nutzfahrzeug, insbesondere auf die gegenüber den in Fig. 14 abgewandelten Teilaufnahmebereiche A' und B' bzw. A" und B" unter Beibehaltung des gesamten horizontalen Bildwinkels ε. Im Speziellen wird in dieser Ausführungsform, die eine dynamische Anpassung der Abbildungsfunktion an die Fahrsituation berücksichtigt, der Teilaufnahmebereich A auf den Teilaufnahmebereich A' vergrößert bzw. der dazugehörige horizontale Bildwinkel α des Teilaufnahmebereichs A wird auf den horizontalen Bildwinkel α' vergrößert. Im Gegensatz dazu wird der Teilaufnahmebereich B auf den Teilaufnahmebereich B' verkleinert bzw. der horizontale Bildwinkel β auf den horizontalen Bildwinkel ß' verkleinert.

Die Vergrößerung des Teilaufnahmebereichs A' bzw. A" und die damit verbundene Verkleinerung des Teilaufnahmebereichs B' bzw. B" finden in Abhängigkeit der Veränderung der Lage (des Ausschwenkens) der Heckkante HK relativ zu dem Nutzfahrzeug 10 bei zunehmender Kurvenfahrt statt. Fig. 16A zeigt das Nutzfahrzeug bei Geradeausfahrt und die dargestellten Teilaufnahmebereiche A und B korrespondieren zu den in Fig. 14 gezeigten Teilaufnahmebereichen A und B. Mit Einleiten der Kurvenfahrt (normale Fahrbahnkurve, Ausschwenken bei Überholvorgängen, Einpark- und Rangiervorgängen und Abbiegevorgänge) schwenkt der Anhänger (Auflieger, Trailer) gegenüber dem Nutzfahrzeug seitlich aus (siehe Fig. 16B). Dies führt dazu, dass sich die Heckkante des Anhängers zur Seite bewegt (ausschwenkt) und durch den Teilaufnahmebereich A wandert. Wird der Teilaufnahmebereich A (also der unverzerrte oder nahezu unverzerrte Bereich) konstant gehalten, wandert bei zunehmender Kurvenfahrt die Heckkante HK aus dem unverzerrten Bereich des Teilaufnahmebereichs A in den verzerrten Bereich des Teilaufnahmebereichs B. Deshalb, um die Heckkante HK stets in dem unverzerrten Bereich zu halten, findet im Verlauf der Kurvenfahrt die oben genannte dynamische Anpassung der Abbildungsfunktion statt, d.h. der anfängliche Bereich des Teilaufnahmebereichs A wird auf den Bereich des Teilaufnahmebereichs A' und mit fortschreitenden Verschwenken des Anhängers weiter auf den Bereich des Teilaufnahmebereichs A" vergrößert und der Bereich des Teilaufnahmebereichs B entsprechend auf den Bereich des Teilaufnahmebereichs B' bzw. B" verkleinert.

Den zugehörigen Abbildungsfunktionen in Fig. 18A bis 18C ist zu entnehmen, dass über die Bereiche der Teilaufnahmebereiche A, A' und A" eine konstante Skalierung stattfindet, die derart ist, dass in diesen Bereichen keine oder kaum eine Verzerrung stattfindet.

Die Lage der Heckkante HK beeinflusst somit den Verlauf der Abbildungsfunktion. Die Berechnungseinheit ist daher so gestaltet, dass sie den Funktionsverlauf der Abbildungsfunktion dynamisch an die Veränderung der Lage der Heckkante HK anpasst. Die Lage der Heckkante kann beispielsweise über (Positions-)Sensoren oder über Fahrzeugdaten (Länge des Fahrzeuges, Anhängers etc. in Verbindung mit einer Erfassung des Lenkwinkels) bestimmt werden. Auch kann die Position der Heckkante HK aus dem erfassten Bild der Aufnahmeeinheit 14 bestimmt werden.

In der vorliegenden speziellen Fahrsituation wird das erfasste (Teil-)Bild des Teilaufnahmebereichs A' bzw. A" mit einem konstanten Skalierungsfaktor durch die Berechnungseinheit 17 bearbeitet, d.h. es findet keine Verjüngung/ Stauchung oder Aufweitung in diesem Bereich statt. Hingegen wird das erfasste (Teil-)Bild des Teilaufnahmebereichs B' bzw. B" durch die Berechnungseinheit 17 entsprechend der in Fig. 18B bzw. 18C abgebildeten Abbildungsfunktionen bearbeitet. Insbesondere findet hier in dem an den horizontalen Bildwinkel α' angrenzenden Bildbereich eine Skalierung statt, die bewirkt, dass der entsprechende Bereich in dem Wiedergabebereich 16 gestaucht wird und auf der Wiedergabeeinheit 15 dargestellt wird.

Das jeweilige Teilbild 20 in Fig. 17A bisl7C entspricht somit dem jeweiligen unverzerrten Teilaufnahmebereich A, A' bzw. A". Weiterhin unterliegt das Teilbild 22 in Fig. 17A bisl7C der oben beschrieben Stauchung. Dadurch kann der Bereich um die Heckkante ausreichend groß und gut erfassbar für den Fahrer dargestellt werden, so dass Hindernisse oder andere Verkehrsteilnehmer in diesem Bereich gut erkannt werden können. Relevante Informationen aus diesem Bereich können demnach unter Ausnutzung der zur Verfügung stehenden Größe des Wiedergabebereiches schnell und zuverlässig erfasst werden.

In Fig. 16D, 17D und 18D ist eine alternative Ausführungsform bezüglich der speziellen Fahrsituation nach Fig. 16A/B/C, 17A/B/C und 18 A/B/C dargestellt.

In dieser Ausführungsform werden die in Fig. 16C, 17C und 18C gezeigten Teilaufnahmebereiche A" und B" und die dazugehörigen horizontalen Bildwinkel α" und β" beibehalten.

Wie bereits oben beschrieben, ist das Aufnahmegerät so ausgelegt, dass es einen größeren Bereich aufnehmen kann, als den in Fig. 1 und 14 gezeigten bzw. verwendeten Aufnahmebereich (Teilaufnahmebereiche A, B). Daher ist in der in Fig. 16D gezeigten Ausführungsform der Aufnahmebereich um einen Teilaufnahmebereich C erweitert, der in geeigneter Weise aus dem gesamten aufgenommen Bereich des Aufnahmegeräts zusätzlich ausgeschnitten ist. Der Teilaufnahmebereich C schließt direkt an den Teilaufnahmebereich B" an.

Der Teilaufnahmebereich A" wird mittels der Berechnungseinheit 17 wie bereits in der Ausführungsform nach Fig. 16A/B/C, 17A/B/C und 18 A/B/C beschrieben bearbeitet, d.h. mit einem konstanten Faktor "n", der ungefähr 1 ist (n ≈ 1), skaliert.

Der Wiedergabebereich 16 der Wiedergabeeinheit 15 weist, wie oben beschrieben, eine vorbestimmte Breite auf. Demzufolge werden die erfassten (Teil-)Bilder der Teilaufnahmebereiche B" und C unter Anwendung der in Fig. 16D gezeigten Abbildungsfunktion skaliert, so dass beide erfassten (Teil-)Bilder 24 und 26 der Teilaufnahmebereiche B" und C in dem Teilbild 22, angezeigt werden können. Es findet hier eine Stauchung der erfassten (Teil-) Bilder der Teilaufnahmebereiche B" und C statt.

Durch die Erweiterung des Aufnahmebereichs durch den Teilaufnahmebereich C können Informationen, die ausgehend von dem Nutzfahrzeug weiter rechts liegen, erfasst werden. In Fig. 16D und 17D ist beispielsweise schemenhaft ein Baum 28 dargestellt, der durch den Einbezug des Teilaufnahmebereichs C erfasst und entsprechend in dem Wiedergabebereich 16 dargestellt wird. Des Weitern können, da der anfängliche Bereich des Teilaufnahmebereichs A auf den Bereich des Teilaufnahmebereichs A" vergrößert wird und der Bereich des Teilaufnahmebereichs B entsprechend auf die Bereich des Teilaufnahmebereichs B" verkleinert wird, Informationen in dem Teilaufnahmebereich B bzw. B" verloren gehen. Daher kann durch zusätzliche Darstellung des Teilaufnahmebereichs C ein Ausgleich für die verlorengegangene Information geschaffen werden. Auch diese Variante beruht auf dem Prinzip der dynamischen Anpassung der Abbildungsfunktion in Abhängigkeit von der Veränderung der Lage (des Ausschwenkens) der Heckkante HK relativ zu dem Nutzfahrzeug 10 bei zunehmender Kurvenfahrt.

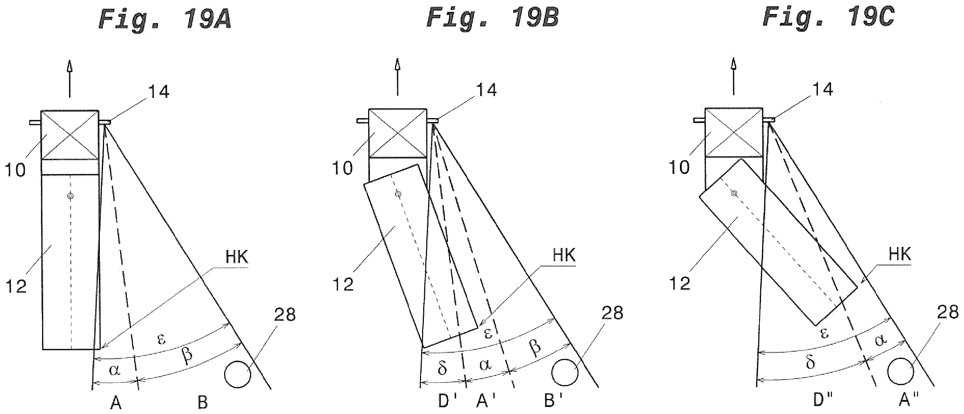

Wie aus Fig. 17A bis 17C erkennbar, wird der durch den Anhänger eingenommene Bildbereich des Bildes 18 aufgrund der Vergrößerung des Teilaufnahmebereichs A (A', A") verhältnismäßig groß, insbesondere im linken Bereich des Bildes 18, der eine unverzerrte Darstellung des Anhängers zunehmend wiedergibt. Neben der der oben beschriebenen "Erweiterung" durch den Teilaufnahmebereich C, um den Bereich von relevanten Informationen (um die Heckkante HK und seitlich daneben und dahinter) für den Fahrer ausreichend groß und aussagekräftig darzustellen, beruht das folgende erfindungsgemäße Sichtsystem nach Fig. 19 bis 21 auf einer anderen dynamischen Anpassung der Abbildungsfunktion.

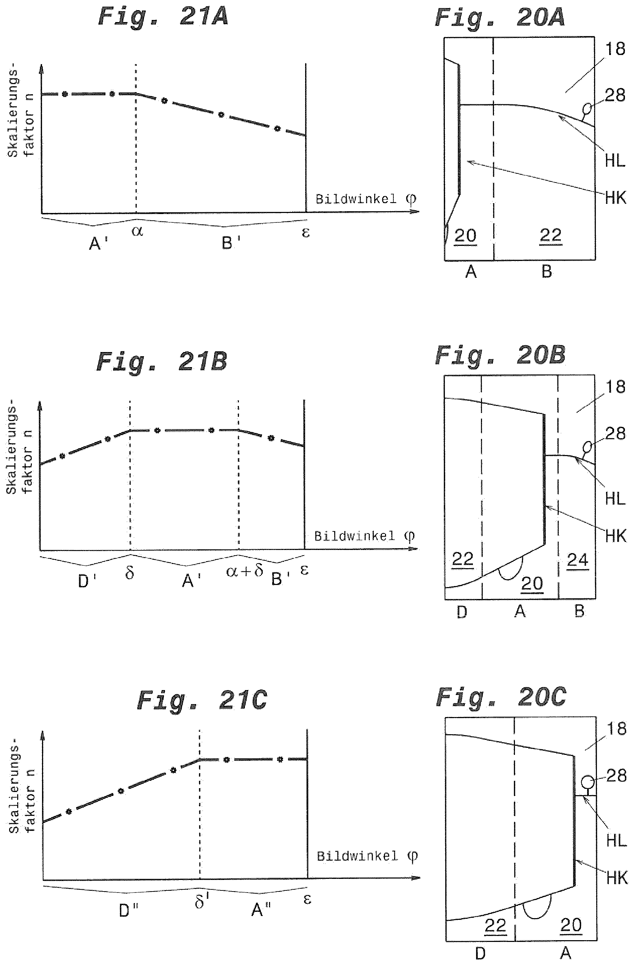

In der vorliegenden Fahrsituation wird das erfasste (Teil-)Bild des Teilaufnahmebereichs A mit einem konstanten Skalierungsfaktor n ≈ 1 durch die Berechnungseinheit 17 bearbeitet, d.h. es findet keine Verjüngung/ Stauchung oder Aufweitung in diesem Bereich statt. Hingegen wird das erfasste (Teil-)Bild des Teilaufnahmebereichs B durch die Berechnungseinheit 17 entsprechend der in Fig. 21A abgebildeten Abbildungsfunktion bearbeitet. Insbesondere findet hier in dem an den horizontalen Bildwinkel α angrenzenden Bildbereich eine Skalierung statt, die bewirkt, dass der entsprechende Bereich des horizontalen Bildwinkels β in dem Wiedergabebereich 16 der Wiedergabeeinheit 15 gestaucht wird.

Die "Stauchung" wird dabei vornehmlich in dem Bereich durchgeführt, der nicht den Auflieger zeigt, da dieser Bereich weniger relevante Informationen für den Fahrer enthält. Je nach Kurvenfahrsituation kann somit ein Teil des Aufliegers aus dem wiedergegebenen Bild vollständig bzw. nahezu vollständig weggeschnitten werden.

Bei zunehmender Kurvenfahrt würde die Heckkante des Anhängers in dem Bild 18 der Fig. 20A aus dem Teilbild 20 in das Teilbild 22 wandern, d.h. in den verzerrten Bereich bzw. in den verzerrten Teilaufnahmebereich B. Da aber erfindungsgemäß eine Verzerrung in dem Bereich um die Heckkante HK nicht erwünscht ist, findet bei zunehmender Kurvenfahrt eine dynamische Anpassung der Abbildungsfunktion statt.

Wie aus Fig. 21B erkennbar wird der Funktionsverlauf der Abbildungsfunktion derart angepasst, dass der unverzerrte Bereich A (Teilaufnahmebereich A) von der linken Seite in Fig. 21A (wie auch Fig. 20A) in den mittleren Bereich in Fig. 21B (wie auch Fig. 20B) wandert und den Teilaufnahmebereich A' bildet. Hingegen wird der Bereich bzw. der Teilaufnahmebereich B, der rechts an den Teilaufnahmebereich A anschließt (also der in Richtung vom Fahrzeug weg), verkleinert und bildet den Bereich bzw. den Teilaufnahmebereich B' aus. Bedingt durch die Nichtskalierung des Teilaufnahmebereichs A' und die Skalierung bzw. Stauchung des Teilaufnahmebereichs B' wird ein neuer Teilaufnahmebereich D' an der linken Seite des Teilaufnahmebereichs A' gebildet. Dieser Teilaufnahmebereich D' wird wiederum mit einem Skalierungsfaktor ungleich 1 skaliert, d.h. gestaucht. Da sich in diesem Teilaufnahmebereich D' hauptsächlich der zum Nutzfahrzeug näher liegende Bereich des Anhängers ist, wird dieser über diesen Bereich gestaucht im Teilbild 26 dargestellt. Weiterhin wird der Teilaufnahmebereich B' im Bild 18 als Teilbild 24 dargestellt. Die "gestauchten" Teilbilder 24 und 26 bilden zusammen das Teilbild 22.

Mit zunehmender Kurvenfahrt erfolgt die Verschiebung des Teilaufnahmebereichs A bzw. A' zum rechten Bildrand des Bildes 18, bis sich dieser Teilaufnahmebereich A bzw. A' schließlich direkt an den rechten Bildrand des Bildes 18 anschließt, wie in Fig. 20C gezeigt. Demzufolge fällt der verzerrte Bereich bzw. der verzerrte Teilaufnahmebereich B bzw. B' weg, der verzerrte Teilaufnahmebereich D' wird vergrößert (mit (Teil-)Bildwinkel δ in Fig. 20C und 21C).

Auch diese Ausführungsform beruht auf dem Prinzip der dynamischen Anpassung der Abbildungsfunktion in Abhängigkeit der Veränderung der Lage (des Ausschwenkens) der Heckkante HK relativ zu dem Nutzfahrzeug 10 bei zunehmender Kurvenfahrt.

Gemäß der oben beschriebenen Anpassung der Abbildungsfunktion bleibt der Bereich um die Heckkante HK stets (nahezu) unverzerrt und die weniger für Informationen relevanten Bereiche werden verzerrt im Bild 18 dargestellt. Dies betrifft insbesondere den Bereich des Anhängers nahe der Fahrzeuges (Zugmaschine).

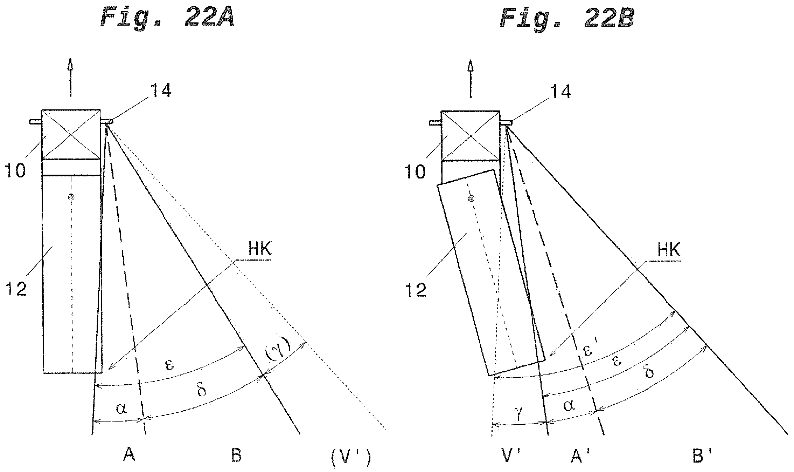

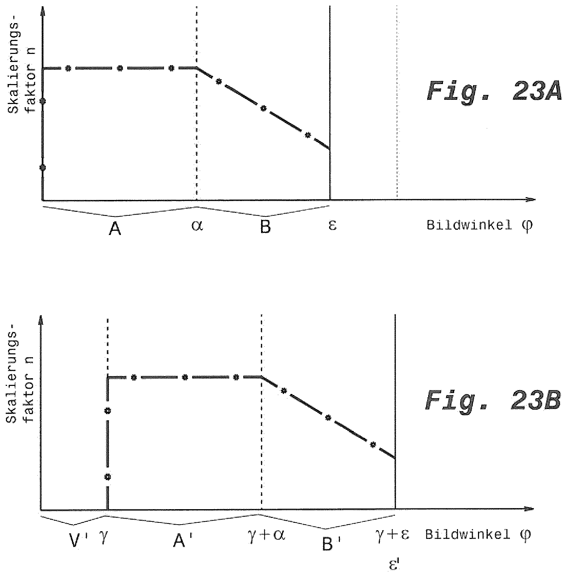

Eine weitere Alternative, um den Bereich mit relevanter Information (um die Heckkante HK und seitlich daneben und dahinter) für den Fahrer ausreichend groß und aussagekräftig darzustellen, ist in Fig. 22 und 23 gezeigt.

In der vorliegenden Fahrsituation wird das erfasste (Teil-)Bild des Teilaufnahmebereichs A mit einem konstanten Skalierungsfaktor durch die Berechnungseinheit 17 bearbeitet, d.h. es findet keine Verjüngung/ Stauchung oder Aufweitung in diesem Bereich statt. Hingegen wird das erfasste (Teil-)Bild des Teilaufnahmebereichs B durch die Berechnungseinheit 17 entsprechend der in Fig. 23A abgebildeten Abbildungsfunktion bearbeitet. Insbesondere findet hier in dem an den horizontalen Bildwinkel α angrenzenden Bildbereich eine Skalierung statt, die bewirkt, dass der entsprechende Bereich des horizontalen Bildwinkels δ in dem Wiedergabebereich 16 der Wiedergabeeinheit 15 gestaucht wird.

Die "Stauchung" wird dabei vornehmlich in dem Bereich durchgeführt, der nicht den Auflieger zeigt, da dieser Bereich weniger relevante Informationen für den Fahrer enthält.

Bei zunehmender Kurvenfahrt würde die Heckkante des Anhängers in den verzerrten Bereich bzw. in den verzerrten Teilaufnahmebereich B bzw. B' wandern. Da aber erfindungsgemäß eine Verzerrung in dem Bereich um die Heckkante HK nicht erwünscht ist, findet bei zunehmender Kurvenfahrt eine dynamische Anpassung der Abbildungsfunktion statt.

Wie aus Fig. 23A und 23B erkennbar wird der Funktionsverlauf der Abbildungsfunktion derart angepasst, dass der unverzerrte Bereich A (Teilaufnahmebereich A) mit dem Ausschwenken der Heckkante HK mitwandert. Da sowohl der Teilaufnahmebereich A (A') als auch der Teilaufnahmebereich B (B') in der Größe in horizontaler Richtung konstant gehalten werden, kommt es zu einer Verschiebung des gesamten Bildwinkels ε vom Fahrzeug weg mit der Aufnahmeeinheit als Drehpunkt.

Durch die Drehverschiebung des Gesamtsichtfeldes über den Winkel γ wird ein weitere Bereich V' im linken Bereich der Abbildungsfunktion in Fig. 23B erzeugt, in dem keine bzw. eine Skalierung mit dem Faktor 0 stattfindet und somit zu einer Ausblendung dieses Bereiches im Bild 18 führt. Diese Drehung kann z.B. durch eine tatsächliche Drehung der Aufnahmeeinheit oder durch Ausschneiden eines Bildbereiches aus dem aufgenommenen Gesamtbild erfolgen.

Auch diese Ausführungsform beruht auf dem Prinzip der dynamischen Anpassung der Abbildungsfunktion in Abhängigkeit der Veränderung der Lage (des Ausschwenkens) der Heckkante HK relativ zu dem Nutzfahrzeug 10 bei zunehmender Kurvenfahrt.

Wie den Fig. 22A und 22B zu entnehmen ist, wird die Heckkante HK in dem unverzerrten Teilaufnahmebereich A bzw. A' an einer nahezu konstanten Stelle gehalten. Es versteht sich, dass die Heckkante auch innerhalb des Teilaufnahmebereichs A bzw. A' nicht unbedingt an einer Stelle verbleibt, sondern innerhalb des Bereichs des Teilaufnahmebereichs A bzw. A' wandern kann bzw. darin verschoben wird.

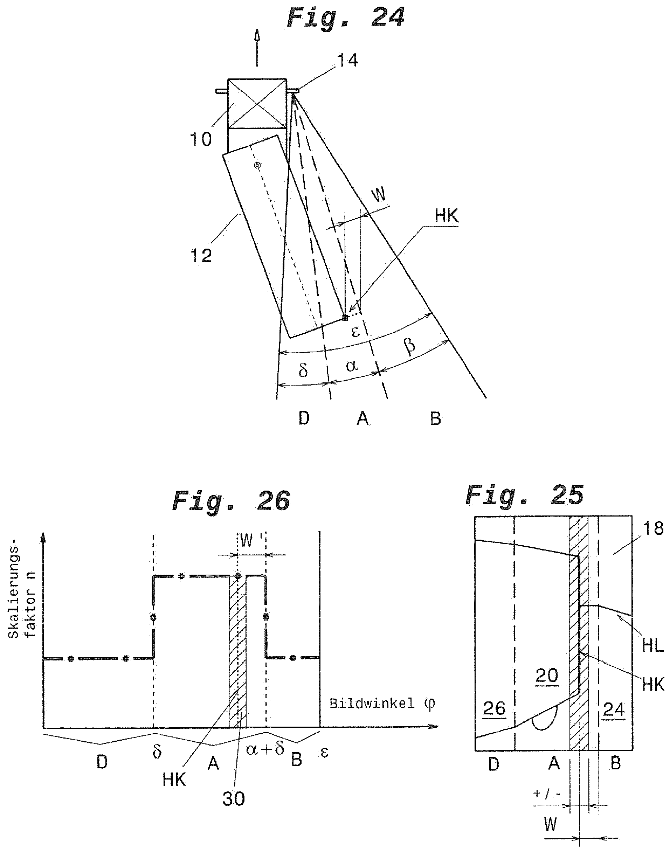

Das Halten der Heckkante HK an einer konstanten Stelle bzw. innerhalb eines Toleranzbereiches 30 wird in den Fig. 24 bis 26 gezeigt. Die in der Draufsicht der Fig. 24 gezeigte Fahrsituation ist der in Fig. 19B gezeigten Fahrsituation ähnlich, in der sich das Fahrzeug in zunehmender Kurvenfahrt befindet. Der Teilaufnahmebereich A / A' ist gemäß der in Fig. 26 gezeigten Abbildungsfunktion bereits innerhalb des Gesamtbereiches über den Gesamtbildwinkel ε verschoben (siehe Ausführungen zu Fig. 21A bis 21C). Diese Verschiebung, wie oben beschrieben, beruht auf dem Prinzip der dynamischen Anpassung der Abbildungsfunktion in Abhängigkeit der Veränderung der Lage (des Ausschwenkens) der Heckkante HK relativ zu dem Nutzfahrzeug 10 bei zunehmender Kurvenfahrt.

Die Berechnungseinheit 17 ist hier derart angepasst, dass aus der aktuellen Lage der Heckkante HK die Abbildungsfunktion so angepasst wird (d.h. der Bereich A wie in Zusammenhang mit Fig. 21A bis 21C beschrieben verschoben wird), dass die Heckkante HK sich in dem Toleranzbereich 30 in einem Abstand W vom rechten Rand des Teilaufnahmebereichs A befindet. Der Abstand W kann dabei stets konstant gehalten werden oder stets ein Mindestmaß für W nicht unterschreiten, was sicher stellt, dass unmittelbar neben der Heckkante HK liegende Bereiche der Fahrzeugumgebung unverzerrt, ebenso wie die Heckkante, und in den dazu realen Proportionen dargestellt werden. Der Abstand W kann z.B. als Abstand der Heckkante relativ zur Grenze des unverzerrten Winkelbereichs bestimmt sein, der senkreckt zu der Fahrzeuglängsachse (Fahrzeug bzw. unverschwenkter Anhänger verläuft, oder als Abstand, der senkrecht zur Achse des verschwenkten Anhängers verläuft.

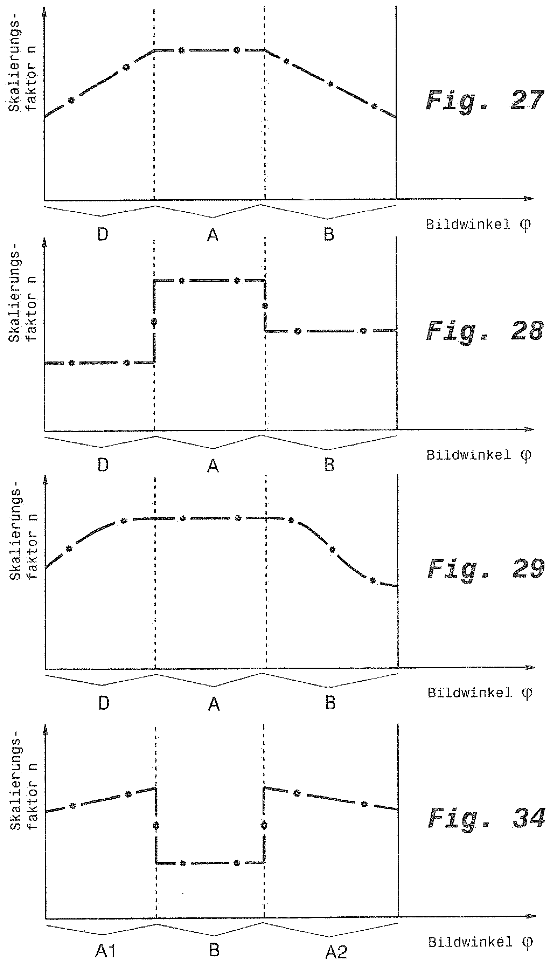

In Fig. 27 bis 29 sind verschiedene Möglichkeiten von Abbildungsfunktionen gezeigt.

In allen gezeigten Funktionen befindet sich der unverzerrte Bereich (Teilaufnahmebereich A) in der Mitte und wird mit jeweils einem verzerrten linken Teilaufnahmebereich D und einem verzerrten rechten Teilaufnahmebereich B umgeben. Die Verzerrungen können unterschiedlich erzielt werden, je nach Verlauf der Funktion in diesen Teilaufnahmebereichen B und D. In Fig. 27 ist der jeweilige Funktionsverlauf ausgehend von dem unverzerrten Bereich linear fallend, was zu einer stetig zunehmenden Stauchung/Verzerrung führt. In Fig. 28 ist der jeweilige Funktionsverlauf ausgehend von dem unverzerrten Bereich konstant, allerdings mit einem zu dem Teilaufnahmebereich A unterschiedlichen Skalierungsfaktor (d.h. Skalierungsfaktor ungleich 1 bzw. kleiner 1), so dass die Abbildungsfunktion einen sprunghaften Verlauf aufzeigt (eine Sprungfunktion ist). In Fig. 29 ist der jeweilige Funktionsverlauf ausgehend von dem unverzerrten Bereich nicht linear fallend, was zu einer nicht stetigen zunehmenden Stauchung/Verzerrung führt.

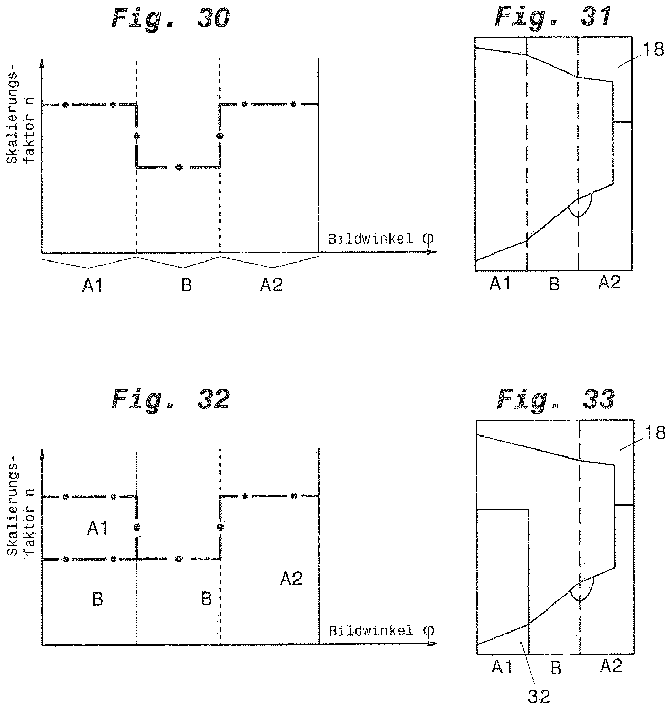

Im Gegensatz zu den Abbildungsfunktionen der Fig. 27 bis 30, enthält die Abbildungsfunktion der Fig. 31 einen mittleren verzerrten Teilaufnahmebereich B und jeweils links und rechts davon einen unverzerrten Teilaufnahmebereich A1 bzw. A2. Das in dem Wiedergabebereich 16 entsprechende dargestellte Bild 18 ist in Fig. 31 dargestellt. Auch hier befindet sich die Heckkante HK im unverzerrten Bereich / Teilaufnahmebereich (hier A1). Der seitliche Anhängerbereich zwischen der Heckkante HK und dem Führerhaus wird überwiegend verzerrt im Teilaufnahmebereich B dargestellt. Und der Bereich des Anhängers nahe dem Führerhaus wird wiederum verzerrungsfrei (Bereich A2) dargestellt.

Wie es in der Modifikation nach Fig. 31 und 33 gezeigt ist, kann der Teilaufnahmebereich A1 sich nicht gänzlich über den Bildbereich vertikal erstrecken, sondern nur einen unteren Teil betreffen. Der obere Teil wird dem verzerrten Teilaufnahmebereich B zugeordnet. Somit wird der Straßenbereich im Bereich des Anhängers nahe dem Führerhaus angezeigt und somit wird ein unverzerrter Nahbereich 32 dargestellt, der relevante Informationen enthalten kann. Dieser Bereich kann auch durch einen eingeblendeten Rahmen dem Fahrer deutlich gemacht werden.

Eine Einblendung eines Rahmens kann auch bei einem sprunghaften Verlauf der Abbildungsfunktion von Vorteil sein, insbesondere wenn z.B. nur in einem Teilbereich des abgebildeten Bereichs in vertikaler Bildwinkelrichtung, zusätzlich zur horizontalen Bildwinkelrichtung im gesamten Bereich, verzerrt ist. damit dem Fahrer der "Sprung" in der Funktion auch bildlich dargestellt wird. Dies dient vor allem zum besseren Verständnis des wiedergegebenen Bildes. Weiterhin ist es in allen oben gezeigten Beispielen möglich, das jeweilig dargestellte Bild bzw. Teilbilder mit zusätzlichen Einblendungen zu belegen, die für den Fahrer relevante Informationen enthalten, wie z.B. Abstands- oder Warnhinweise.

Eine weitere Modifikation ist in Fig. 34 dargestellt. Hier erhalten die eigentlich unverzerrten Teilaufnahmebereiche A1 und A2 bedingt durch den leicht fallenden Verlauf der Funktion eine gering steigende Verzerrung zu dem jeweiligen Randbereich des Bildes, wobei sich üblicherweise in diesen Randbereichen weniger wertvolle Informationen befinden.

### Bezugszeichenliste

- 10: Nutzfahrzeug
- 12: Auflieger
- 13: Sichtsystem
- 14: Aufnahmeeinheit
- 15: Wiedergabeeinheit
- 16: Wiedergabebereich
- 17: Berechnungseinheit
- 18: Bild
- 20: Teilbild
- 22: Teilbild
- 24: Teilbild
- 26: Teilbild
- 28: Baum
- 30: Toleranzbereich
- 32: Unverzerrter Nahbereich
- A: Sichtfeld
- A1: Sichtfeld
- A2: Sichtfeld
- A': Sichtfeld
- A": Sichtfeld
- B: Sichtfeld
- B': Sichtfeld
- B": Sichtfeld
- C: Sichtfeld
- D: Sichtfeld
- D": Sichtfeld
- E: Sichtfeld
- W: Abstand
- f(ϕ): Abbildungsfunktion
- HK: Heckkante
- HL: Horizontlinie
- n: Skalierungsfaktor
- α: Bildwinkel
- α': Bildwinkel
- α": Bildwinkel
- β: Bildwinkel
- β': Bildwinkel
- β": Bildwinkel
- γ: Bildwinkel
- δ: Bildwinkel
- δ': Bildwinkel
- ϕ: Bildwinkel
- ε: Bildwinkel
- ε': Bildwinkel

## Patentansprüche

1. Sichtsystem (13) für ein Fahrzeug mit Anhänger (10) zur Darstellung eines außerhalb des Fahrzeuges (10) liegenden Aufnahmebereiches (A, B, C, D), enthaltend
eine am Fahrzeug (10) angebrachte Aufnahmeeinheit (14) mit mindestens einem Aufnahmegerät zur Erfassung eines Bildes des Aufnahmebereiches (A, B, C. D), wobei der Aufnahmebereich mindestens zwei Teilaufnahmebereiche (A, B, C, D) aufweist, eine Wiedergabeeinheit (15) für den Fahrzeuginnenraum mit einem Wiedergabebereich (16) mit vorbestimmten Abmessungen, und
eine Berechnungseinheit (17), die das von der Aufnahmeeinheit (14) erfasste Bild verarbeitet und zur Anzeige an die Wiedergabeeinheit (15) zuführt,
wobei die Berechnungseinheit (17) angepasst ist, das von der Aufnahmeeinheit (14) erfasste Bild des Aufnahmebereiches (A, B, C) zumindest in einer Bildwinkelrichtung mit einem Skalierungsfaktor (n) zu skalieren,
wobei die Wiedergabeeinheit (15) angepasst ist, das skalierte Bild in dem Wiedergabebereich (16) anzuzeigen, wobei das skalierte Bild mindestens zwei Teilbilder (20, 22, 24, 26) enthält, die den mindestens zwei Teilaufnahmebereichen (A, B, C, D) jeweilig entsprechen, und eines der Teilbilder (20) ungestaucht ist und eines der Teilbilder (22, 24, 26) gestaucht ist,
wobei der Skalierungsfaktor (n) von der Berechnungseinheit (17) in Abhängigkeit eines Bildwinkels (ϕ) des erfassten Bildes des Aufnahmebereiches (A, B, C) entsprechend einer Abbildungsfunktion (f(ϕ)) bestimmt wird, und
wobei die Abbildungsfunktion (f(ϕ)) entsprechend einer Fahrsituation so angepasst ist, dass bei der Fahrsituation eines Abbiegevorgangs oder einer Kurvenfahrt des Fahrzeuges mit Anhänger, der Bildbereich, in dem eine Heckkante (HK) des Anhängers zu sehen ist, in dem Teilbild (20) liegt, das ungestaucht ist.

2. Sichtsystem (13) nach Anspruch 1, bei dem die Heckkante (HK) des Anhängers während der Fahrsituation eines Abbiegevorgangs oder einer Kurvenfahrt des Fahrzeuges mit Anhänger stets in dem Teilbild (20) liegt, das ungestaucht ist.

3. Sichtsystem (13) nach Anspruch 1 oder 2, bei dem der Teilaufnahmebereich, der dem Teilbild entspricht, das ungestaucht ist, dynamisch während der Fahrsituation eines Abbiegevorgangs oder einer Kurvenfahrt des Fahrzeuges mit Anhänger in Abhängigkeit der Lage der Heckkante (HK) relativ zu dem Fahrzeug in seiner Größe angepasst wird.

4. Sichtsystem (13) nach Anspruch 1 oder 2, bei dem die Größe des Teilaufnahmebereiches, der dem Teilbild entspricht, das ungestaucht ist, konstant ist, und die Abbildungsfunktion dynamisch während der Fahrsituation eines Abbiegevorgangs oder einer Kurvenfahrt des Fahrzeuges mit Anhänger in Abhängigkeit von der Lage der Heckkante (HK) relativ zu dem Fahrzeug so angepasst wird, dass das in dem Wiedergabebereich (16) dargestellte ungestauchte Teilbild entsprechend der Lage der Heckkante verschoben wird.

5. Sichtsystem (13) nach Anspruch 1 oder 2, bei dem der Aufnahmebereich dynamisch während der Fahrsituation eines Abbiegevorgangs oder einer Kurvenfahrt des Fahrzeuges mit Anhänger in Abhängigkeit der Lage der Heckkante (HK) relativ zu dem Fahrzeug verschwenkt wird.

6. Sichtsystem (13) nach einem der Ansprüche 1 bis 5, bei dem ein Abstand (W) zwischen der Heckkante (HK) und einem außenliegenden Rand des Teilaufnahmebereichs, der dem Teilbild entspricht, das ungestaucht ist, während der Fahrsituation eines Abbiegevorgangs oder einer Kurvenfahrt des Fahrzeuges mit Anhänger in Abhängigkeit der Lage der Heckkante (HK) relativ zu dem Fahrzeug konstant gehalten wird.

7. Sichtsystem (13) nach einem der Ansprüche 1 bis 6, bei dem die Abbildungsfunktion (f(ϕ)) mindestens bereichsweise nicht konstant ist.

8. Sichtsystem (13) nach einem der Ansprüche 1 bis 7, bei dem die Abbildungsfunktion (f(ϕ)) mindestens einen Bereich aufweist, in welchem der Skalierungsfaktor (n) in Abhängigkeit des Bildwinkels (ϕ) linear verläuft.

9. Sichtsystem (13) nach einem der Ansprüche 1 bis 8, bei dem die Abbildungsfunktion (f(ϕ)) mindestens bereichsweise konstant ist.

10. Sichtsystem (13) nach einem der Ansprüche 1 bis 9, bei dem die Abbildungsfunktion (f(ϕ)) mindestens einen Bereich aufweist, in welchem der Skalierungsfaktor (n) in Abhängigkeit des Bildwinkels (ϕ) nicht linear verläuft.

11. Sichtsystem (13) nach einem der Ansprüche 1 bis 10, bei dem die Abbildungsfunktion (f(ϕ)) mindestens einen Bereich aufweist, in welchem der Skalierungsfaktor (n) in Abhängigkeit des Bildwinkels (ϕ) stetig verläuft.

12. Sichtsystem (13) nach einem der Ansprüche 1 bis 11, bei dem die Abbildungsfunktion (f(ϕ)) mindestens zwei unterschiedlich verlaufende Bereiche in der Bildwinkelrichtung aufweist.

13. Sichtsystem (13) nach einem der Ansprüche 1 bis 12, bei dem die Abbildungsfunktion (f(ϕ)) mindestens zwei unterschiedlich verlaufende Bereiche in der Bildwinkelrichtung aufweist, die den mindestens zwei Teilaufnahmebereichen entsprechen und der Funktionsverlauf im Übergangsbereich zwischen den Teilaufnahmebereichen sprunghaft ist.

14. Sichtsystem (13) nach einem der Ansprüche 1 bis 13, bei dem der dargestellte Bildwinkel (ϕ) in Abhängigkeit der Fahrsituation variabel ist.

15. Sichtsystem (13) nach einem der Ansprüche 1 bis 14, bei dem die Lage der Heckkante (HK) mittels eines Positionssensors oder über Fahrzeugdaten, die die Länge des Fahrzeuges, die Länge des Anhängers und einen Lenkwinkel enthalten, oder mittels der Berechnungseinheit (17) aus dem erfassten Bild des Aufnahmebereiches bestimmt wird.

## Claims

1. A visual system (13) for a vehicle with trailer (10) for displaying a capturing region (A, B, C, D) outside the vehicle, comprising
a capturing unit (14) attached to the vehicle (10) and comprising at least one capturing device for capturing an image of the capturing region (A, B, C, D), said capturing region comprising at least two capturing sections (A, B, C, D),
a display unit (15) for the vehicle interior including a display portion (16) having predetermined dimensions, and
a calculation unit (17) for processing the image captured by the capturing unit (14) and supplying the same to the display unit (15) for display,
wherein the calculation unit (17) is adapted to scale the image of the capturing region (A, B, C) captured by the capturing unit (14) at least in one image angle direction with a scaling factor (n),
wherein the display the unit (15) is adapted to display the scaled image in the display portion (16), the scaled image comprising at least two partial images (20, 22, 24, 26), which correspond to the at least two capturing sections (A, B, C, D), respectively, and one of the partial images (20) is uncompressed and one of the partial images (22, 24, 26) is compressed,
wherein the scaling factor (n) of the calculation unit (17) is determined dependent on an image angle (ϕ) of the captured image of the capturing region (A, B, C) and corresponding to a mapping function (f(ϕ)), and
wherein the mapping function is adapted in accordance to a respective driving situation such that in a driving situation where the vehicle with trailer turns or drives along curves, the partial image where a rear edge (HK) of the trailer can be seen, is located in the uncompressed partial image (20).

2. The visual system (13) according to claim 1, wherein the rear edge (HK) of the trailer is always located in the uncompressed partial image (20) in a driving situation where the vehicle with trailer turns or drives along curves.

3. The visual system (13) according to claim 1 or 2, wherein the capturing section corresponding to the uncompressed partial image is dynamically adjusted with regard to its size dependent on the position of the rear edge HK relative to the vehicle in a driving situation where the vehicle with trailer turns or drives along curves.

4. The visual system (13) of claim 1 or 2, wherein the size of the capturing section corresponding to the uncompressed partial image is constant, and the mapping function is dynamically adjusted with regard to the position of the rear edge HK relative to the vehicle in a driving situation where the vehicle with trailer turns or drives along curves, such that the uncompressed partial image displayed in the display portion (16) is shifted in accordance with the position of the rear edge.

5. The visual system (13) according to claim 1 or 2, wherein the capturing region is dynamically pivoted dependent on the position of the rear edge HK relative to the vehicle in a driving situation where the vehicle with trailer turns or drives along curves.

6. The visual system (13) according to anyone of claims 1 to 5, wherein a distance (W) between the rear edge (HK) and an exterior of the capturing section corresponding to the uncompressed partial image is constant dependent on the position of the rear edge (HK) relative to the vehicle in a driving situation where the vehicle with trailer turns or drives along curves.

7. The visual system (13) according to anyone of claims 1 to 6, wherein the mapping function (f(ϕ)) is, at least partially, not constant.

8. The visual system (13) of anyone of claims 1 to 7, wherein the mapping function (f(ϕ)) has at least one section, where the scaling factor (n) is linear depending on the image angle (ϕ).

9. The visual system (13) of anyone of claims 1 to 8, wherein the mapping function (f(ϕ)) is, at least partially, constant.

10. The visual system (13) of anyone of claims 1 to 9, wherein the mapping function (f(ϕ)) shows at least one part where the scaling factor (n) is not linear depending on the image angle (ϕ).

11. The visual system (13) according to anyone of claims 1 to 10, wherein the mapping function (f(ϕ)) shows at least one part where the scaling factor (n) is continuous depending on the image angle (ϕ).

12. The visual system (13) of anyone of claims 1 to 11, wherein the mapping function (f(ϕ)) shows at least two different parts in the image angle direction.

13. The visual system (13) of anyone of claims 1 to 12, wherein the mapping function (f (ϕ)) comprises at least two different regions in the image angle direction, which corresponds to the at least two capturing sections and the curve of the mapping functions shows a jump discontinuity in the transition region between the capturing regions.

14. The visual system (13) of anyone of claims 1 to 13, wherein the displayed image angle (ϕ) is variable dependent on the driving situation.

15. The visual system (13) of anyone of claims 1 to 14, wherein the position of the rear edge (HK) is determined by means of a position sensor, or by means of vehicle data comprising the length of the vehicle, the length of the trailer, and a steering angle, or determined by the calculation unit (17) from the captured image of the capturing region.

## Revendications

1. Système de vision (13) pour un véhicule avec remorque (10) pour la représentation d'une zone de prise de vue (A, B, C, D) située en dehors du véhicule (10), contenant une unité de prise de vue (14) montée sur le véhicule (10) avec au moins un appareil de prise de vue pour la détection d'une image de la zone de prise de vue (A, B, C, D), dans lequel la zone de prise de vue présente au moins deux zones de prise de vue partielles (A, B, C, D),
une unité de restitution (15) pour l'intérieur du véhicule avec une zone de restitution (16) avec des dimensions prédéterminées, et
une unité de calcul (17), qui traite l'image détectée par l'unité de prise de vue (14) et l'amène pour l'affichage à l'unité de restitution (15),
dans lequel l'unité de calcul (17) est adaptée pour mettre à l'échelle l'image détectée par l'unité de prise de vue (14) de la zone de prise de vue (A, B, C) au moins dans une direction d'angle d'image avec un facteur de mise à l'échelle (n),
dans lequel l'unité de restitution (15) est adaptée pour afficher l'image mise à l'échelle dans la zone de restitution (16), dans lequel l'image mise à l'échelle contient au moins deux images partielles (20, 22, 24, 26), qui correspondent respectivement aux au moins deux zones de prise de vue partielles (A, B, C, D), et une des images partielles (20) est non déformée et une des images partielles (22, 24, 26) est déformée,
dans lequel le facteur de mise à l'échelle (n) est déterminé par l'unité de calcul (17) en fonction d'un angle d'image (ϕ) de l'image détectée de la zone de prise de vue (A, B, C) conformément à une fonction de représentation (f(ϕ)), et
dans lequel la fonction de représentation (f(ϕ)) est adaptée en fonction d'une situation de conduite de sorte que, dans le cas de la situation de conduite d'un changement de direction ou d'une conduite en virage du véhicule avec remorque, la zone d'image dans laquelle une arête arrière (HK) de la remorque est visible se trouve dans l'image partielle (20) qui n'est pas déformée.

2. Système de vision (13) selon la revendication 1, dans lequel l'arête arrière (HK) de la remorque pendant la situation de conduite d'un changement de direction ou d'une conduite en virage du véhicule avec remorque se trouve toujours dans l'image partielle (20) qui n'est pas déformée.

3. Système de vision (13) selon la revendication 1 ou 2, dans lequel la taille de la zone de prise de vue partielle qui correspond à l'image partielle qui n'est pas déformée est adaptée dynamiquement pendant la situation de conduite d'un changement de direction ou d'une conduite en virage du véhicule avec remorque en fonction de la position de l'arête arrière (HK) par rapport au véhicule.

4. Système de vision (13) selon la revendication 1 ou 2, dans lequel la taille de la zone de prise de vue partielle qui correspond à l'image partielle qui n'est pas déformée est constante, et la fonction de représentation est adaptée dynamiquement pendant la situation de conduite d'un changement de direction ou d'une conduite en virage du véhicule avec remorque en fonction de la position de l'arête arrière (HK) par rapport au véhicule de telle sorte que l'image partielle non déformée représentée dans la zone de restitution (16) est décalée en fonction de la position de l'arête arrière.

5. Système de vision (13) selon la revendication 1 ou 2, dans lequel la zone de prise de vue est pivotée dynamiquement pendant la situation de conduite d'un changement de direction ou d'une conduite en virage du véhicule avec remorque en fonction de la position de l'arête arrière (HK) par rapport au véhicule.

6. Système de vision (13) selon l'une quelconque des revendications 1 à 5, dans lequel une distance (W) entre l'arête arrière (HK) et un bord extérieur de la zone de prise de vue partielle qui correspond à l'image partielle qui n'est pas déformée est maintenue constante pendant la situation de conduite d'un changement de direction ou d'une conduite en virage du véhicule avec remorque en fonction de la position de l'arête arrière (HK) par rapport au véhicule.

7. Système de vision (13) selon l'une quelconque des revendications 1 à 6, dans lequel la fonction de représentation (f(ϕ)) n'est pas constante au moins par zone.

8. Système de vision (13) selon l'une quelconque des revendications 1 à 7, dans lequel la fonction de représentation (f(ϕ)) présente au moins une zone dans laquelle le facteur de mise à l'échelle (n) s'étend linéairement en fonction de l'angle d'image (ϕ).

9. Système de vision (13) selon l'une quelconque des revendications 1 à 8, dans lequel la fonction de représentation (f(ϕ)) est constante au moins par zone.

10. Système de vision (13) selon l'une quelconque des revendications 1 à 9, dans lequel la fonction de représentation (f(ϕ)) présente au moins une zone dans laquelle le facteur de mise à l'échelle (n) ne s'étend pas linéairement en fonction de l'angle d'image (ϕ).

11. Système de vision (13) selon l'une(13) quelconque des revendications 1 à 10, dans lequel la fonction de représentation (f(ϕ)) présente au moins une zone dans laquelle le facteur de mise à l'échelle (n) s'étend en continu en fonction de l'angle d'image (ϕ).

12. Système de vision (13) selon l'une quelconque des revendications 1 à 11, dans lequel la fonction de représentation (f(ϕ)) présente au moins deux zones s'étendant de manière différente dans la direction d'angle d'image.

13. Système de vision (13) selon l'une quelconque des revendications 1 à 12, dans lequel la fonction de représentation (f(ϕ)) présente au moins deux zones s'étendant de manière différente dans la direction d'angle d'image, qui correspondent à au moins deux zones de prise de vue partielles et la courbe de fonction dans la zone de transition entre les zones de prise de vue partielles se fait par sauts.

14. Système de vision (13) selon l'une quelconque des revendications 1 à 13, dans lequel l'angle d'image (ϕ) représenté est variable en fonction de la situation de conduite.

15. Système de vision (13) selon l'une quelconque des revendications 1 à 14, dans lequel la position de l'arête arrière (HK) est déterminée au moyen d'un capteur de position ou par le biais de données de véhicule, qui contiennent la longueur du véhicule, la longueur de la remorque et un angle de braquage, ou au moyen de l'unité de calcul (17) à partir de l'image détectée de la zone de prise de vue.
